# FASCICULE DE BREVET EUROPEEN

(11) **EP 1 748 355 B1**
(45) Date de publication et mention de la délivrance du brevet: **01.07.2009**
(21) Numéro de dépôt: 06117750.7
(22) Date de dépôt: 24.07.2006
(51) Int. Cl.: G06F 5/06

(54) **Dispositif d'interfaçage unidirectionnel de type FIFO entre un bloc maître et un bloc esclave et bloc esclave correspondant**
Vorrichtung zur unidirektionalen Interface-Verbindung des FIFO-Typs zwischen einem Master-Block und einem Slave-Block, sowie entsprechender Slave-Block
FIFO-type unidirectional interfacing device between a master block and a slave block, corresponding slave block

(30) Priorité: 26.07.2005 FR 0507988
(43) Date de publication de la demande: 31.01.2007
(73) Titulaire: ATMEL NANTES SA, 44306 Nantes Cédex 3 (FR)
(72) Inventeur: Garnier, Sylvain, 44300 Nantes (FR); Delalande, Thierry, 44300 Nantes (FR); Birsan, Laurentiu, 44340 Bouguenais (FR)
(74) Mandataire: Guéné, Patrick Lucien Juan Joseph

(56) Documents cités:
- US-A- 4 271 480
- US-A- 5 826 041
- US-A- 6 026 451
- ANONYMOUS: "Data Synchronization in an Asynchronous Ring Network Environment Utilizing Variable-Length Data Packets" IBM TECHNICAL DISCLOSURE BULLETIN, vol. 26, no. 4, 1 septembre 1983 (1983-09-01), pages 1870-1873, XP002379429 New York, US

## Description

### 1. DOMAINE DE L'INVENTION

Le domaine de l'invention est celui des circuits électroniques.

Plus précisément, l'invention concerne un dispositif d'interfaçage, du type permettant un interfaçage unidirectionnel entre un bloc maître et un bloc esclave.

De façon classique, un tel dispositif d'interfaçage comprend un plan mémoire géré selon un mode « premier entré premier sorti » (ou FIFO, pour « First In First Out » en anglais), avec des pointeurs d'écriture et de lecture. Ce plan mémoire permet de stocker des mots venant du bloc maître, via un bus d'entrée. Le dispositif d'interfaçage (aussi appelé « mémoire FIFO » par la suite) comprend également un banc de registres de sortie pouvant contenir des mots lus dans le plan mémoire, et fournissant un signal de sortie pouvant être lu par le bloc esclave. Il reçoit des requêtes de lecture provenant du bloc esclave et des requêtes d'écriture provenant du bloc maître. Chaque requête de lecture requiert la lecture d'un groupe de mots. Un mot est par exemple un octet.

Il est important de noter que dans le présent document, le terme « registre » doit être compris, dans un sens large, comme tout circuit permettant de stocker temporairement un ensemble de bits. Typiquement, à chaque front montant d'un signal d'horloge, un registre échantillonne et bloque sur sa sortie le signal présent sur son entrée.

Le dispositif d'interfaçage selon l'invention a de nombreuses applications, telles que par exemple l'interfaçage entre un microprocesseur, jouant le rôle du bloc maître, et un co-processeur, jouant le rôle du bloc esclave. Le co-processeur est par exemple un processeur de signal numérique (ou DSP, pour « Digital Signal Processor » en anglais).

Plus généralement, l'invention peut s'appliquer dans tous les cas où le bloc esclave souhaite lire dans le dispositif d'interfaçage des groupes de mots dont la taille (en nombre de mots) varie d'un groupe à l'autre.

### 2. ART ANTÉRIEUR

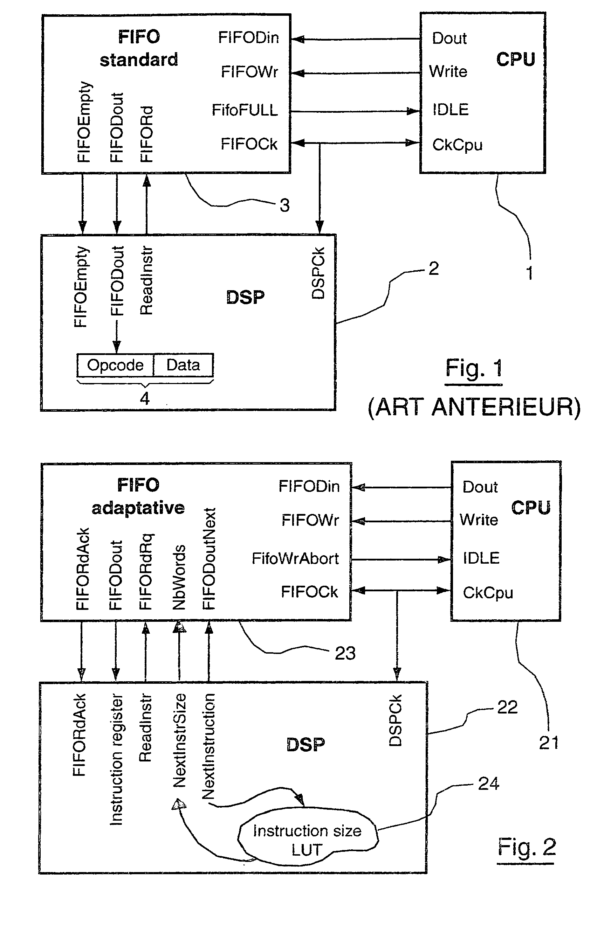

On présente maintenant les inconvénients de l'art antérieur, à travers l'application particulière précitée et illustrée sur la **figure 1****,** dans laquelle les blocs maître et esclave sont respectivement un microprocesseur 1 (aussi appelé CPU par la suite) et un co-processeur 2 (aussi appelé DSP par la suite), et dans laquelle les groupes de mots de taille variable sont des instructions 4 que le microprocesseur transmet, via le dispositif d'interfaçage 3, au co-processeur afin qu'il les exécute.

Plus précisément, pour l'écriture de mots dans le plan mémoire, le microprocesseur 1 envoie des requêtes d'écriture (FIFOWr=1) et place des mots sur le bus d'entrée (FIFODin) du dispositif d'interfaçage 3. Pour la lecture de mots, le co-processeur 2 envoie des requêtes de lecture (FIFORd=1) et lit des mots sur le bus de sortie (FIFODout) du dispositif d'interfaçage 3. L'horloge (FIFOClk) du dispositif d'interfaçage 3 est fournie par le microprocesseur 1.

Il est en effet connu, pour réduire la charge d'un microprocesseur, d'utiliser des co-processeurs qui traitent des flux d'information. Chaque flux entre le microprocesseur et un co-processeur à un coût important qu'il est nécessaire de minimiser.

Une instruction (aussi appelée commande ou bien transaction) du microprocesseur vers le co-processeur est composée d'un mot de code opération (ou « opcode ») et N mots d'opérande (ou « mots de données), avec N≥0. Le jeu d'instructions comporte des instructions de tailles différentes (c'est-à-dire comprenant par exemple un, deux, trois ou quatre mots au total). Ces instructions sont écrites dans le dispositif d'interfaçage de type FIFO qui permet une élasticité dans l'exécution du code microprocesseur et du code co-processeur.

De façon classique, un premier mécanisme d'asservissement existe entre le dispositif d'interfaçage 3 et le microprocesseur 1 : quand il détecte que le plan mémoire est plein, le dispositif d'interfaçage envoie au microprocesseur un message d'indication de mémoire pleine (FIFOFull=1) afm que ce dernier cesse d'écrire, de façon à éviter tout débordement. Un second mécanisme d'asservissement existe entre le dispositif d'interfaçage 3 et le co-processeur : quand il détecte que le plan mémoire est vide, le dispositif d'interfaçage envoie au co-processeur un message d'indication de mémoire vide (FIFOEmpty=1) afin que ce dernier cesse de lire, de façon à éviter des accès en lecture inutiles.

Par ailleurs, il convient de gérer l'alignement, dans le plan mémoire du dispositif d'interfaçage, des mots lus par le co-processeur. En effet, le dispositif d'interfaçage doit stocker dans son plan mémoire des instructions de taille variable, et les restituer en respectant un alignement, de façon que pour chaque instruction le co-processeur reçoive le mot de code opération (opcode) suivi éventuellement d'un ou plusieurs mots d'opérande qui doivent être alignés correctement dans son registre d'instruction.

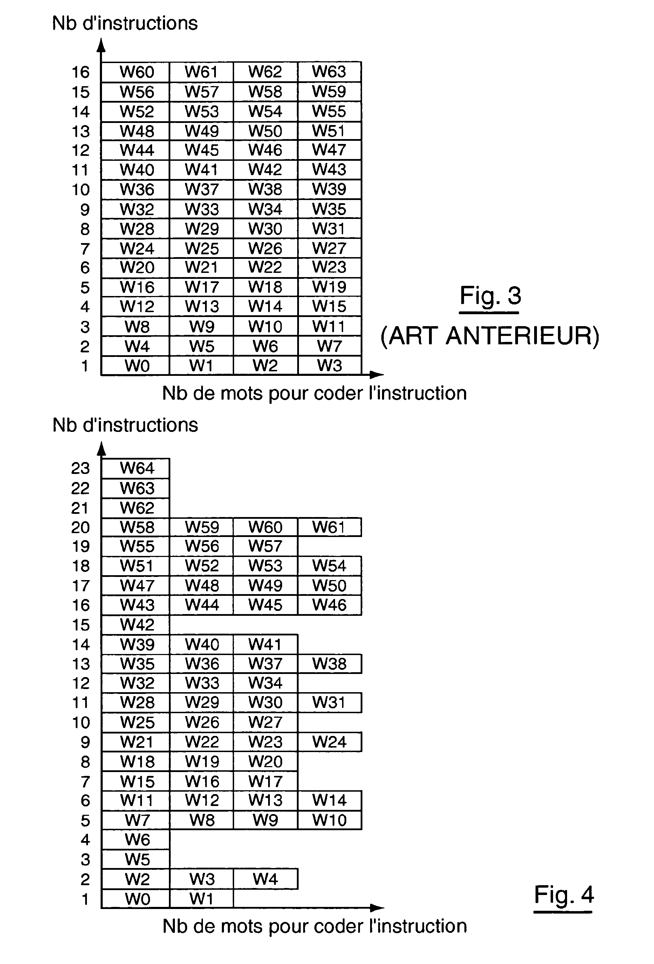

On présente maintenant brièvement, en relation avec la **figure 3****,** la technique actuelle pour gérer cet alignement. La figure 3 est une représentation d'un exemple de plan mémoire d'une mémoire FIFO standard (dispositif d'interfaçage) de taille 64 mots. Dans le cas d'une mémoire FIFO standard, les dimensions sont fixées. Le nombre de lignes de mots de n bits est figé en hardware. Chaque ligne comprend un nombre déterminé de mots, égal à la taille maximale d'une instruction. Ainsi, dans l'exemple de la figure 3, il y a 16 lignes de 4 mots chacune (une instruction comprend 4 mots au maximum). Afin de gérer l'alignement des mots dans le plan mémoire, le microprocesseur écrit systématiquement 4 mots dans le plan mémoire pour chacune des instructions successives, quelle que soit la taille réelle de l'instruction. Pour cela, le microprocesseur complète le ou les mots de chaque instruction avec un ou plusieurs mots de bourrage (mécanisme de « stuffing »). Ainsi, dans le cas d'une mémoire FIFO standard, les données sont déjà alignées à la sortie si la mémoire FIFO fournit les informations de manière parallèle (c'est-à-dire en fournissant les mots 4 par 4, dans l'exemple précité). Il est important de noter que dans la technique actuelle, le co-processeur ne fournit pas d'information sur la longueur de l'instruction à la mémoire FIFO car cette dernière fournit toujours un vecteur de la taille maximale d'une instruction. Le co-processeur n'exploite que la partie significative du vecteur à l'issue du décodage d'instruction.

Il apparaît que le double mécanisme d'asservissement précité, dans sa mise en oeuvre actuelle, ainsi que la technique connue de gestion de l'alignement, ne constituent pas une solution optimale pour permettre une élasticité maximale du remplissage du plan mémoire du dispositif d'interfaçage par le microprocesseur, ainsi que son vidage par l'exécution du code co-processeur.

En effet, l'utilisation de mots de bourrage, pour gérer l'alignement des instructions dans le plan mémoire, empêche une utilisation totale de l'espace mémoire pour les seuls mots des instructions. En outre, cela augmente le nombre d'accès en écriture que doit effectuer le microprocesseur. Enfin, cela ralentit les temps de transfert des instructions depuis le microprocesseur jusqu'au co-processeur, car les messages d'indication de mémoire pleine (FIFOFull=1) et de mémoire vide (FIFOEmpty=1) correspondent à des décisions prises sans aucune anticipation et avec une trop forte granularité (dans l'exemple précité, on gère des blocs de 4 mots quelle que soit la taille réelle des instructions).

A Le dispositif selon le document US 4 271 480 décrit un dispositif d'interfaçage permettant un interfaçage unidirectionnel entre un bloc maître et un bloc esclave comprenant
- un plan mémoire géré selon un mode "premier entré-premier sorti " et permettant de stocker des mots venant du bloc maître, via un bus d'entrée,
- un banc de registres de sortie pouvant contenir des mots lus dans le plan mémoire, et fournissant un signal de sortie pouvant être lu par le bloc esclave;
- des moyens de réception de requêtes de lecture provenant du bloc esclave et de requêtes d'écriture provenant du bloc maître, chaque requête de lecture requérant la lecture d'un groupe de mots.

### 3. OBJECTIFS DE L'INVENTION

L'invention a notamment pour objectif de pallier ces différents inconvénients de l'état de la technique.

Plus précisément, l'un des objectifs de la présente invention, dans au moins un mode de réalisation, est de fournir un dispositif d'interfaçage de type FIFO entre un bloc maître et un bloc esclave, ne nécessitant pas l'écriture de mots de bourrage et permettant donc d'optimiser l'utilisation du plan mémoire du dispositif d'interfaçage.

L'invention a également pour objectif, dans au moins un mode de réalisation, de fournir un tel dispositif d'interfaçage permettant une gestion optimale des temps de transferts entre le bloc maître et le bloc esclave, via le dispositif d'interfaçage.

Un autre objectif de l'invention, dans au moins un mode de réalisation, est de fournir un tel dispositif d'interfaçage qui soit simple à mettre en oeuvre et peu coûteux.

Encore un autre objectif de l'invention, dans au moins un mode de réalisation, est de fournir un tel dispositif d'interfaçage permettant au bloc maître d'écrire des données indifféremment en une fois ou en plusieurs fois.

Un objectif complémentaire de l'invention, dans au moins un mode de réalisation, est de fournir un tel dispositif d'interfaçage permettant une disponibilité de la donnée en lecture instantanée aussitôt qu'elle est valide (c'est-à-dire comporte le nombre de mots élémentaires attendus).

### 4. EXPOSÉ DE L'INVENTION

Ces différents objectifs, ainsi que d'autres qui apparaîtront par la suite, sont atteints selon l'invention à l'aide d'un dispositif d'interfaçage, du type permettant un interfaçage unidirectionnel entre un bloc maître et un bloc esclave, et comprenant :
- un plan mémoire géré selon un mode « premier entré premier sorti », avec des pointeurs d'écriture et de lecture, et permettant de stocker des mots venant du bloc maître, via un bus d'entrée (FIFODin) ;
- un banc de registres de sortie pouvant contenir des mots lus dans le plan mémoire, et fournissant un signal de sortie (FIFODout) pouvant être lu par le bloc esclave ;
- des moyens de réception de requêtes de lecture (FIFORdRq=1) provenant du bloc esclave et de requêtes d'écriture (FIFOWr=1) provenant du bloc maître, chaque requête de lecture requérant la lecture d'un groupe de mots.

Selon l'invention, le dispositif d'interfaçage comprend en outre :
- des moyens de réception, pour chaque requête de lecture, de la taille (NbWords) du groupe de mots associé à ladite requête de lecture, ladite taille étant variable d'une requête de lecture à l'autre ; et
- des moyens d'acquittement de requêtes de lecture, générant pour chaque requête de lecture un signal d'acquittement avec une valeur « vrai » (FIFORdAck=1) si un nombre de mots au moins égal à la taille (NbWords) du groupe de mots associé à ladite requête de lecture est disponible sur le signal de sortie (FIFODout) du banc de registres de sortie.

Ainsi, l'invention repose sur une approche tout à fait nouvelle et inventive de l'interfaçage entre un bloc maître et un bloc esclave, puisque le principe général de l'invention consiste à gérer l'acquittement de chaque requête de lecture (formulée par le bloc esclave) en tenant compte de la taille du groupe de mots dont cette requête requiert la lecture (cette taille étant fournie par le bloc esclave).

En d'autres termes, dans l'application particulière précitée, le dispositif d'interfaçage gère l'acquittement de chaque requête de lecture formulée par le co-processeur en tenant compte de la taille de l'instruction à lire en réponse à cette requête.

De cette façon, il n'est plus nécessaire (contrairement à la technique de l'art antérieur discutée ci-dessus) que les groupes de mots soient alignés dans le plan mémoire du dispositif d'interfaçage, et donc il n'est plus nécessaires d'utiliser des mots de bourrage. L'invention permet donc de s'affranchir de tous les inconvénients précités liés à l'utilisation de mots de bourrage.

Par rapport à un bloc esclave de l'art antérieur, le bloc esclave de l'invention doit être modifié notamment de façon à pouvoir transmettre l'information de taille pour chaque groupe de mots à lire, et recevoir et traiter les messages d'acquittement envoyés par le dispositif d'interfaçage.

L'invention concerne aussi un bloc esclave, du type destiné à coopérer avec un bloc maître, via un dispositif d'interfaçage unidirectionnel, ledit bloc esclave comprenant :
- des moyens de transmission de requêtes de lecture (FIFORdRq=1) vers le dispositif d'interfaçage, chaque requête de lecture requérant la lecture d'un groupe de mots ;
- des moyens de lecture d'un signal de sortie (FIFODout) d'un banc de registres de sortie pouvant contenir des mots lus dans un plan mémoire du dispositif d'interfaçage.

Selon l'invention, le bloc esclave comprend en outre :
- des moyens de transmission, pour chaque requête de lecture, de la taille (NbWords) du groupe de mots associé à ladite requête de lecture, ladite taille étant variable d'une requête de lecture à l'autre ; et
- des moyens de réception, pour chaque requête de lecture, d'un signal d'acquittement (FIFORdAck) provenant du dispositif d'interfaçage et possédant une valeur « vrai » (FIFORdAck=1) si un nombre de mots au moins égal à la taille (NbWords) du groupe de mots associé à ladite requête de lecture est disponible sur le signal de sortie (FIFODout) du banc de registres de sortie.

### 5. LISTE DES FIGURES

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un synoptique d'un système de l'art antérieur, dans lequel un dispositif d'interfaçage est placé entre un bloc maître et un bloc esclave ;
- la figure 2 présente un synoptique d'un mode de réalisation particulier du système selon l'invention, dans lequel un dispositif d'interfaçage est placé entre un bloc maître et un bloc esclave ;
- la figure 3 est une représentation d'un exemple de remplissage d'un plan mémoire d'un dispositif d'interfaçage de l'art antérieur (mémoire FIFO standard) de taille 64 mots ;
- la figure 4 est une représentation d'un exemple de remplissage d'un plan mémoire d'un dispositif d'interfaçage selon l'invention de taille 64 mots ;
- la figure 5 est un schéma logique d'un premier mode de réalisation particulier du dispositif d'interfaçage selon l'invention ;
- la figure 6 est un schéma logique d'un second mode de réalisation particulier du dispositif d'interfaçage selon l'invention ;
- la figure 7 illustre la mise en oeuvre d'un mécanisme de traversée directe (« pass-through ») apparaissant sur les figures 5 et 6 ;
- la figure 8 présente des chronogrammes de signaux illustrant un exemple de passage à la valeur «vrai» d'un signal d'annulation d'écriture (FIFOWrAbort=1) généré par un dispositif d'interfaçage selon l'invention ;
- la figure 9 présente des chronogrammes de signaux illustrant un exemple de maintien à la valeur « faux » d'un signal d'annulation d'écriture (FIFOWrAbort=0) généré par un dispositif d'interfaçage selon l'invention ;
- la figure 10 présente des chronogrammes de signaux illustrant un exemple de passage à la valeur «vrai» d'un signal d'acquittement de lecture (FIFORdAck=1) généré par un dispositif d'interfaçage selon l'invention ; et
- la figure 11 présente des chronogrammes de signaux illustrant un exemple de passage à la valeur « faux » d'un signal d'acquittement de lecture (FIFORdAck=0) généré par un dispositif d'interfaçage selon l'invention.

### 6. DESCRIPTION DÉTAILLÉE

Les figures 1 et 3 sont relatives à la technique de l'art antérieur et ont déjà été décrites ci-dessus.

Sur toutes les figures du présent document, les éléments ou signaux identiques sont désignés par une même référence alphanumérique.

L'invention concerne donc une technique d'interfaçage entre un bloc maître et un bloc esclave, via un dispositif d'interfaçage unidirectionnel de type FIFO capable de gérer de façon optimale l'écriture et la lecture de groupes de mots de taille variable d'un groupe à l'autre.

### 6.1 Application particulière : interfaçage microprocesseur/co-processeur

A titre indicatif et non limitatif, on se place dans la suite de la description dans le cas de l'application particulière suivante, déjà évoquée ci-dessus et illustrée sur la **figure 2** : le dispositif d'interfaçage 23 (aussi appelé FIFO adaptative) est placé entre un microprocesseur 21 (aussi appelé CPU), jouant le rôle du bloc maître, et un co-processeur 22 (aussi appelé DSP), jouant le rôle du bloc esclave. Chaque groupe de mots est une instruction comprenant un mot de code opération (opcode) et N mots d'opérande, avec N≥0. Il est clair cependant que l'invention n'est pas limitée à cette application particulière.

Le microprocesseur (maître) écrit dans le plan mémoire de manière synchrone et successive, sans connaissance préalable du nombre de mots à écrire pour chaque instruction. La lecture se fait du côté co-processeur (esclave) de manière combinatoire.

### 6.2 Description des mécanismes en jeu

### 6.2.1 Description structurelle du dispositif d'interfacage

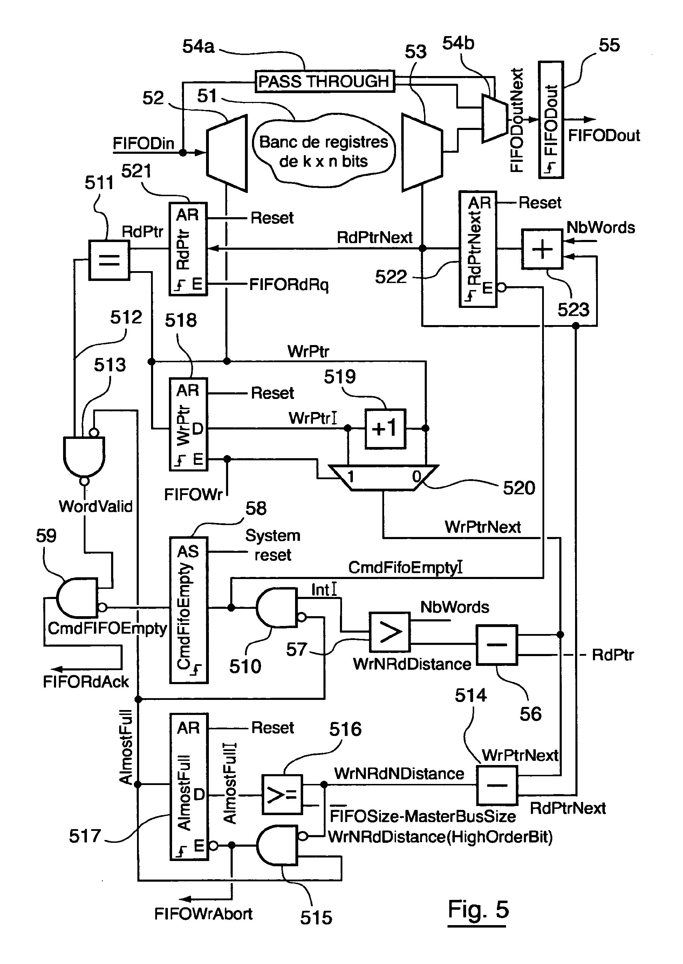

On présente maintenant , en relation avec le schéma logique de la **figure 5****,** un premier mode de réalisation particulier du dispositif d'interfaçage selon l'invention.

Le dispositif d'interfaçage comprend un plan mémoire 51 (par exemple un banc de registres) composé de k mots élémentaires de n bits (par exemple, k=64 et n=8 pour un plan mémoire de 64 octets).

Un premier décodeur d'adresse (représenté par un multiplexeur référencé 52, et aussi appelé moyens d'accès en écriture au plan mémoire) permet de contrôler l'écriture dans le plan mémoire 51 de données présentes sur le bus d'entrée (FIFODin), en fonction d'une valeur courante (WrPtr) du pointeur d'écriture.

Un second décodeur d'adresse (représenté par un multiplexeur référencé 53, et aussi appelé moyens d'accès en lecture au plan mémoire) permet de contrôler la lecture de données dans le plan mémoire 51, en fonction d'une valeur anticipée (RrPtrNext) du pointeur de lecture. Le signal de sortie du second contrôleur est fourni à un banc de registres de sortie 55 qui génère un signal de sortie (FIFODout) pouvant être lu par le co-processeur et qui est une valeur échantillonnée et bloquée (à chaque coup d'horloge) du signal FIFODoutNext présent sur son entrée.

Un mécanisme de traversée directe (« pass-through ») 54a, 54b (discuté en détail par la suite) permet de placer directement (en un seul coup d'horloge) le contenu du bus d'entrée (FIFODin) sur l'entrée du banc de registres de sortie 55.

Ainsi, le signal FIFODout (aussi appelé bus de sortie du dispositif d'interfaçage) contient soit les données provenant du plan mémoire 51, soit celles provenant directement du bus d'entrée (FIFODin).

A titre d'exemple, on suppose par la suite que la taille du bus d'entrée (FIFODin) est égale à un mot élémentaire et la taille du bus de sortie (FIFODout) est égale à quatre mots élémentaires.

Comme illustré sur la figure 2, le dispositif d'interfaçage fournit au co-processeur le signal FIFODoutNext présent en entrée du banc de registres de sortie 55, de façon que, pendant que le dispositif d'interfaçage sert une requête de lecture courante, le co-processeur puisse de manière anticipée obtenir une valeur présumée de l'instruction associée à une requête de lecture suivante et fournir au dispositif d'interfaçage la taille (NbWords) de l'instruction associée à cette requête de lecture suivante. Le co-processeur obtient la taille (NbWords) de l'instruction suivante en décodant le mot d'opcode de l'instruction suivante (présente sur FIFODoutNext), puis en utilisant le mot d'opcode décodé pour interroger une table de correspondance (LookUp Table) entre les mots d'opcode et les tailles d'instruction. Ce mécanisme est référencé 24 sur la figure 2.

Le dispositif d'interfaçage comprend en outre des moyens d'acquittement de requêtes de lecture, générant pour chaque requête de lecture un signal d'acquittement avec une valeur « vrai » (FIFORdAck=1) si un nombre de mots au moins égal à la taille (NbWords) de l'instruction associés à cette requête de lecture est disponible sur le signal de sortie (FIFODout) du banc de registres de sortie.

Ces moyens d'acquittement comprennent :
- des moyens 56 de calcul d'une première distance (WrNRdDistance) entre d'une part une valeur anticipée (WrPtrNext), un coup d'horloge à l'avance, du pointeur d'écriture, et d'autre part une valeur courante (RdPtr) du pointeur de lecture ;
- des premiers moyens 57 de comparaison, permettant de comparer la taille (NbWords) de l'instruction associée à une requête de lecture courante, avec la première distance, de sorte que si la taille n'est pas supérieure à la première distance, les premiers moyens de comparaison génèrent un signal combinatoire intermédiaire avec une valeur «faux» (IntI=0) ;
- des deuxièmes moyens de décision formés d'une porte logique ET 510 dont une première entrée reçoit le signal combinatoire intermédiaire (IntI) et une seconde entrée inversée reçoit un signal séquentiel d'indication de mémoire presque pleine (AlmostFull). Ces deuxièmes moyens de décision 510 génèrent un signal combinatoire d'indication de mémoire vide avec la valeur « vrai » (CmdFifoEmptyI=1) seulement si la taille (NbWords) est supérieure à la première distance (c'est-à-dire si IntI=1) et si le signal séquentiel d'indication de mémoire presque pleine prend la valeur « faux » (AlmostFull=0) ;
- un premier registre intermédiaire 58 permettant d'échantillonner et bloquer le signal combinatoire d'indication de mémoire vide (CmdFifoEmptyI), pour fournir en sortie un signal séquentiel d'indication de mémoire vide (CmdFifoEmpty) ;
- des premiers moyens de décision formés d'une porte logique ET 59 dont une première entrée inversée reçoit le signal séquentiel d'indication de mémoire vide (CmdFifoEmpty) et une deuxième entrée reçoit un signal de validité du calcul de la première distance (WordValid)). Ces premiers moyens de décision 59 génèrent le signal d'acquittement avec la valeur « vrai » (FIFORdAck=1) si le premier registre intermédiaire 58 fournit en sortie le signal séquentiel d'indication de mémoire vide avec la valeur « faux » (CmdFifoEmpty=0) et si le signal de validité du calcul de la première distance possède la valeur « vrai » (WordValid=1) ;

Pour générer le signal de validité du calcul de la première distance (WordValid), le dispositif d'interfaçage comprend :
- des moyens 511 de détection d'un alignement des valeurs courantes (WrPtr, RdPtr) des pointeurs d'écriture et de lecture, générant un signal d'alignement 512 avec la valeur « vrai » en cas d'alignement ;
- des troisièmes moyens de décision formés d'une porte logique ET 513 dont une première entrée reçoit le signal d'alignement 512 et une deuxième entrée inversée reçoit le signal séquentiel d'indication de mémoire presque pleine (AlmostFull). Ces troisièmes moyens de décision 513 génèrent le signal de validité du calcul de la première distance avec la valeur « faux » (WordValid=0) seulement si le signal d'alignement 512 prend la valeur « vrai » et si le signal séquentiel d'indication de mémoire presque pleine prend la valeur « faux » (AlmostFull=0).

Le dispositif d'interfaçage comprend en outre des moyens d'annulation de requêtes d'écriture, générant un signal d'annulation (FIFOWrAbort) et comprenant eux-mêmes :
- des moyens 514 de calcul d'une seconde distance (WrNRdNDistance) entre les valeurs anticipées (WrPtrNext, RdPtrNext) des pointeurs d'écriture et de lecture ;
- des quatrièmes moyens de décision formés d'une porte logique ET 515 dont une première entrée inversée reçoit le bit de poids fort de la seconde distance (WrNRdNDistance(HighOrderBit)) et une deuxième entrée reçoit le signal séquentiel d'indication de mémoire presque pleine (AlmostFull). Ces quatrièmes moyens de décision 515 génèrent le signal d'annulation avec la valeur « vrai » (FIFOWrAbort=1) si le signal séquentiel d'indication de mémoire presque pleine prend la valeur « vrai » (AlmostFull=1) alors que la seconde distance est presque nulle (WrNRdNDistance(HighOrderBit)=0).

Les moyens de génération d'un signal séquentiel d'indication de mémoire presque pleine (AlmostFull) comprennent eux-mêmes :
- des seconds moyens 516 de comparaison, permettant de comparer la seconde distance (WrNRdNDistance) avec une valeur seuil déterminée (par exemple la différence entre la taille du plan mémoire et la taille du bus d'entrée : FIFOSize-MasterBusSize), de sorte que si la seconde distance est supérieure ou égale à la valeur seuil, les seconds moyens de comparaison génèrent un signal combinatoire d'indication de mémoire presque pleine avec la valeur « vrai » (AlmostFullI=1) ;
- un deuxième registre intermédiaire 517 permettant d'échantillonner et bloquer le signal combinatoire d'indication de mémoire presque pleine (AlmostFullI), pour fournir en sortie ledit signal séquentiel d'indication de mémoire presque pleine (AlmostFull). Ce second registre intermédiaire possède une entrée d'activation (E) inversée recevant le signal d'annulation (FIFOWrAbort).

Pour générer les valeurs courante (WrPtr) et anticipée (WrPtrNext) du pointeur d'écriture, le dispositif d'interfaçage comprend :
- un troisième registre intermédiaire 518, permettant d'échantillonner et bloquer une valeur combinatoire du pointeur d'écriture (WrPtrI), pour fournir en sortie la valeur courante (WrPtr) du pointeur d'écriture. Ce troisième registre intermédiaire possède une entrée d'activation (E) recevant le signal (FIFOWr) portant les requêtes d'écriture (FIFOWr=1) ;
- des premiers moyens 519 d'incrémentation, recevant la valeur courante (WrPtr) du pointeur d'écriture et appliquant un pas d'incrémentation égal à la taille du bus d'entrée (FIFODin) (1 dans cet exemple), pour fournir la valeur combinatoire du pointeur d'écriture (WrPtrI) ;
- des premiers moyens 520 de multiplexage, générant la valeur anticipée (WrPtrNext) du pointeur d'écriture et possédant des première et seconde entrées recevant respectivement la valeur courante (WrPtr) du pointeur d'écriture et la valeur combinatoire du pointeur d'écriture (WrPtrI), et une entrée de commande recevant le signal (FIFOWr) portant les requêtes d'écriture, de sorte que la valeur anticipée (WrPtrNext) du pointeur d'écriture est égale à la valeur combinatoire du pointeur d'écriture (WrPtrI) si l'entrée de commande reçoit une requête d'écriture (FIFOWr=1) ou à la valeur courante (WrPtr) du pointeur d'écriture si l'entrée de commande ne reçoit pas une requête d'écriture (FIFOWr=0).

Pour générer les valeurs courante (RrPtr) et anticipée (RrPtrNext) du pointeur de lecture, le dispositif d'interfaçage comprend :
- un quatrième registre intermédiaire 521, permettant d'échantillonner et bloquer la valeur anticipée du pointeur de lecture (RdPtrNext), pour fournir en sortie la valeur courante (RdPtr) du pointeur de lecture. Ce quatrième registre intermédiaire possède une entrée d'activation (E) recevant le signal (FIFORdRq) portant les requêtes de lecture (FIFORdRq=1) ;
- un cinquième registre intermédiaire 522, permettant d'échantillonner et bloquer une valeur anticipée intermédiaire (RdPtrNextI) du pointeur de lecture, pour fournir en sortie la valeur anticipée (RdPtrNext) du pointeur de lecture. Ce cinquième registre intermédiaire possède une entrée d'activation (E) inversée recevant le signal combinatoire d'indication de mémoire vide (CmdFifoEmptyI) ;
- des moyens d'addition 523, permettant d'additionner la valeur anticipée (RdPtrNext) du pointeur de lecture et la taille (NbWords) de l'instruction associée à une requête de lecture courante, pour générer la valeur anticipée intermédiaire (RdPtrNextI) du pointeur de lecture.

### 6.2.2 Ecriture d'une donnée

Le microprocesseur (maître) écrit sur le bus d'entrée FIFODin la donnée et positionne FIFOWr à '1'. La donnée est alors écrite dans le plan mémoire 51 via les moyens d'écriture 52. L'ensemble des bascules du banc de registres formant le plan mémoire 51 voit le bus d'entrée FIFODin sur leur entrée de données. Les bascules dont l'indice correspond à la valeur du pointeur d'écriture WrPtr ont leur entrée d'activation (Enable) positionnée à '1'. En outre, le registre WrPtr est incrémenté. WrPtrNext est la valeur anticipée du pointeur WrPtr dans le cas où une écriture va se réaliser. Dans le cas où le plan mémoire 51 est plein, le signal d'annulation d'écriture FIFOWrAbort est positionné à '1'. Le maître doit alors faire redescendre sa requête d'écriture FIFOWr à '0'.

### 6.2.3 Lecture d'une donnée

La lecture se fait lorsque l'entrée FIFORdRq est positionnée à '1'. La donnée peut être lue à la sortie de FIFODout lorsque le signal d'acquittement de lecture FifoRdAck vaut '1'. Le registre RdPtrNext contient la valeur anticipée du pointeur de lecture. Celle ci est calculée à partir de la valeur antérieure de RdPtrNext en ajoutant la valeur NbWords qui est une entrée de la FIFO. NbWords est une information qui donne la taille de la prochaine instruction à lire, calée sur les octets de poids forts de FiFODoutNext. D'autre part, FIFODout peut servir directement de registre d'instruction au co-processeur.

L'information de taille NbWords est obtenue en présentant à l'esclave la prochaine instruction présumée (via FIFODoutNext) de façon à en récupérer la taille (NbWords). RdPtrNext ne peut être mis à jour que si le plan mémoire 51 n'est pas vide (voir l'entrée Enable du registre de RdPtrNext). La fonction primordiale de RdPtrNext est de réaliser un accès dans le banc de registres formant le plan mémoire 51 en avance de phase car les temps de traversée des multiplexeurs de sortie du banc sont très importants. L'accès étant anticipé, on échantillonne la donnée dans l'ensemble de registres FIFODout, ce qui permet d'avoir des données de sorties stables pendant toute une période d'horloge.

### 6.2.4 Détermination de l'état vide (CmdFifoEmptyI=0)

Le passage du signal CmdFifoEmptyI à '1', c'est-à-dire la détermination de l'état vide du plan mémoire, est effectué de façon anticipée de façon à pouvoir échantillonner le signal combinatoire CmdFifoEmptyI à l'aide du registre référencé 58 pour sortir le signal séquentiel CmfFifoEmpty (possédant un état stable sur une période d'horloge) à destination du co-processeur (esclave).

Comme expliqué ci-dessus, on se base sur le calcul d'une première distance WrNRdDistance (entre la valeur courante du pointeur de lecture et la valeur anticipée du pointeur d'écriture), réalisé par un opérateur de soustraction.

On n'utilise pas dans ce calcul de distance la valeur anticipée du pointeur de lecture car on est dans l'impossibilité de la calculer car elle dépend de NbWords qui dépend de FIFODoutNext. Or comme le plan mémoire est vide FIFODoutNext n'est pas valide. On est dans un régime transitoire : on passe de l'état FIFO VIDE à l'état FIFO NON VIDE, dès qu'une donnée est écrite. Cette donnée passe par le mécanisme de traversée directe (« pass-through »), NbWords est donc remis à jour de manière combinatoire quasi-instantanément par l'esclave et est comparé instantanément à la distance WrNRdDistance de manière à déterminer la valeur de CmdFifoEmptyI. Cela ne permet pas d'utiliser la valeur anticipée du pointeur de lecture RdPtrNext qui nécessiterait un coup d'horloge supplémentaire pour se remettre à jour (car c'est un élément séquentiel).

### 6.2.5 Détermination de l'état plein (FIFOWrAbort=1)

Le passage du signal FIFOWrAbort à '1', c'est-à-dire la détermination de l'état plein du plan mémoire, est réalisé à l'aide d'un raisonnement par l'absurde. On utilise le calcul anticipé de la seconde distance WrNRdNDistance (entre les valeurs anticipées des pointeurs de lecture et d'écriture) et l'information AlmostFull qui nous renseigne sur le fait que le plan mémoire contient plus de « FiFoSize ― MasterBusSize » mots (FiFOSize est la taille en mots du plan mémoire et MasterBusSize la taille en mots du bus d'entrée FiFODin). Si une écriture est détectée (FiFOWr à '1'), la seconde distance anticipée se réactualise mais si le plan mémoire ne possède plus assez d'espace mémoire alors il y aura un dépassement du pointeur de lecture par le pointeur d'écriture. La distance anticipée va donc passer d'une valeur proche de « FiFoSize ― MasterBusSize » à une valeur proche de 0 (dans le cas où il y a plusieurs bus d'entrée de tailles différentes). On détecte ainsi une incohérence entre le signal AlmostFull, qui nous renseigne sur le fait que le plan mémoire est plus qu'a moitié plein et le fait que la seconde distance est presque nulle. Cette information permet alors de faire une requête d'annulation de l'écriture auprès du maître (FIFOWrAbort=1).

On détaille maintenant , à travers un exemple, le raisonnement logique conduisant au calcul de la valeur du signal FIFOWrAbort. Lors d'une réinitialisation (reset), le signal AlmostFull vaut '0'. Lorsqu'au moins « FIFOSize ― MasterBusSize » mots sont présents en mémoire, la seconde distance WNrRdNDistance est par conséquent supérieure ou égale à « FIFOSize ― MasterBusSize » et le signal AlmostFull prend la valeur '1'. Dans le cas où le plan mémoire a une taille de 64 mots, la distance maximale entre les pointeurs RdPNext tr et WrPtrNext est 63 et est contenue par le registre WrNRdNDistance qui est codé sur 6 bits. Si une requête d'écriture est détectée (FiFOWr passe à '1') et que WrNRdNDistance vaut 63, WrNRdNDistance va être mis à jour et prendre une valeur proche de 0 (0, 1, 2 ... en fonction de la taille du bus d'entrée FIFODin qui dans cet exemple vaut 1). WrNRdNDistance(HighOrderBit) = WrNRdNDistance(5) qui contenait la valeur '1' passe à '0'. La sortie *FIFOWrAbort* va donc passer de '0' à '1'. AlmostFull ne peut plus être mis à jour car son entrée Enable complémentée est à '1'. Tant que la seconde distance anticipée ne reprend pas une valeur proche de « FIFOSize ― MasterBusSize », FIFOWrAbort est maintenu à '1'. AlmostFull prendra la valeur '0' lorsque la distance aura repris une valeur cohérente, c'est-à-dire proche de FIFOSize, et que la distance WrRdDistance sera passée en dessous de la valeur « FIFOSize - MasterBusSize ».

### 6.2.6 Détermination de la validité de la donnée lue (WordValid=1)

Le calcul de la valeur du signal WordValid permet de déterminer si le calcul de distance anticipée est valide ou non. En effet celui-ci n'est valable que si il y a eu plus d'écritures que de lectures dans le plan mémoire, car la détermination anticipée dépend de NbWords qui dépend de la donnée FiFODoutNext. Si le plan mémoire est vide, le calcul anticipé est réalisé avec NbWords issu du décodage d'une valeur non déterminée qui peut être une écriture précédente. On dit alors que si les pointeurs sont alignés et dans le cas où AlmostFull est à l'état '0', alors la donnée n'est pas valide car le calcul anticipé est erroné. On utilise l'information AlmostFull en plus de la comparaison de RdPtr et WrPtr car ces derniers peuvent être alignés dans le cas où le plan est plein, et la donnée est alors valide.

### 6.2.7 Acquittement de la requête de lecture

Le signal d'acquittement de lecture FiFORdAck est positionné à '1' lorsque le plan mémoire n'est pas vide (CmdFifoEmpty=0) et que le signal WordValid est à '1'. La donnée sur FIFODout est alors considérée comme bien formée et peut être lue par l'esclave.

### 6.2.8 Différenciation des pointeurs WrNRdDistance ET WrNRdNDistance

Le dispositif de la figure 5 est prévu pour fonctionner en régime transitoire et continu. Le régime continu est atteint lorsque le plan mémoire est non vide et non plein. Le régime transitoire est atteint lors des passages de l'état non vide à vide, vide à non vide, plein à non plein et non plein à plein. On cherche à minimiser les coûts temporels lors des régimes transitoires qui peuvent être prépondérants dans une application mettant en oeuvre un co-processeur asservi par un microprocesseur. Or pour répondre au problème matériel (hardware) de temps de propagation des signaux, on anticipe la lecture dans le plan mémoire. Celle-ci est faite par la sélection des mots à lire à l'aide de multiplexeurs dont les temps de traversée sont non négligeables. Cette anticipation est assumée par la valeur anticipée RdPtrNext du pointeur de lecture qui est obtenue en l'incrémentant de la valeur NbWords (nombre de mots de la prochaine instruction présumée). Or dans le cas où le plan mémoire est vide, on ne connaît pas la prochaine instruction puisqu'elle n'a pas été écrite, NbWords est donc inconnu. RdPtrNext ne doit pas être mis à jour. Dès que l'opcode attendu est positionné sur le bus d'entrée FIFODin, il est propagé de manière combinatoire (quasi-instantanée) sur le bus FIFODoutNext, NbWords est alors remis à jour. CmdFifoEmptyI peut donc prendre la valeur '0' si le nombre de mots suffisant a été écrit pour que l'instruction soit bien formée. C'est pour cela que l'on a besoin d'un calcul de distance dédié : WrNRdDistance. On compare cette distance à NbWords, ce qui revient à comparer la différence entre les valeurs futures des pointeurs de lecture et d'écriture, sans pénalité en terme de coup d'horloge. En effet, on est en régime transitoire et RdPtrNext nécessiterait un coup d'horloge supplémentaire pour prendre la valeur «RdPtr + NbWords» (sachant que RdPtrNext est un élément séquentiel et que quand le plan mémoire est vide, RdPtrNext n'est plus réactualisé). Ce calcul de distance anticipé permet de gagner un coup d'horloge par rapport à un mécanisme mettant en oeuvre la comparaison de RdPtrNext et WrPtrNext, car ce dernier demanderait un coup d'horloge pour que RdPtrNext se réactualise après que NbWords se soit réactualisé, puis un deuxième coup d'horloge pour que le registre référencé 58 échantillonne CmdFifoEmptyI pour obtenir CmdFiFOEmpty. Le dispositif présenté ne nécessite qu'un seul coup d'horloge pour que CmdFifoEmpty prenne en compte la mise à jour de NbWords.

### 6.3 Variante avec un seul calcul de distance

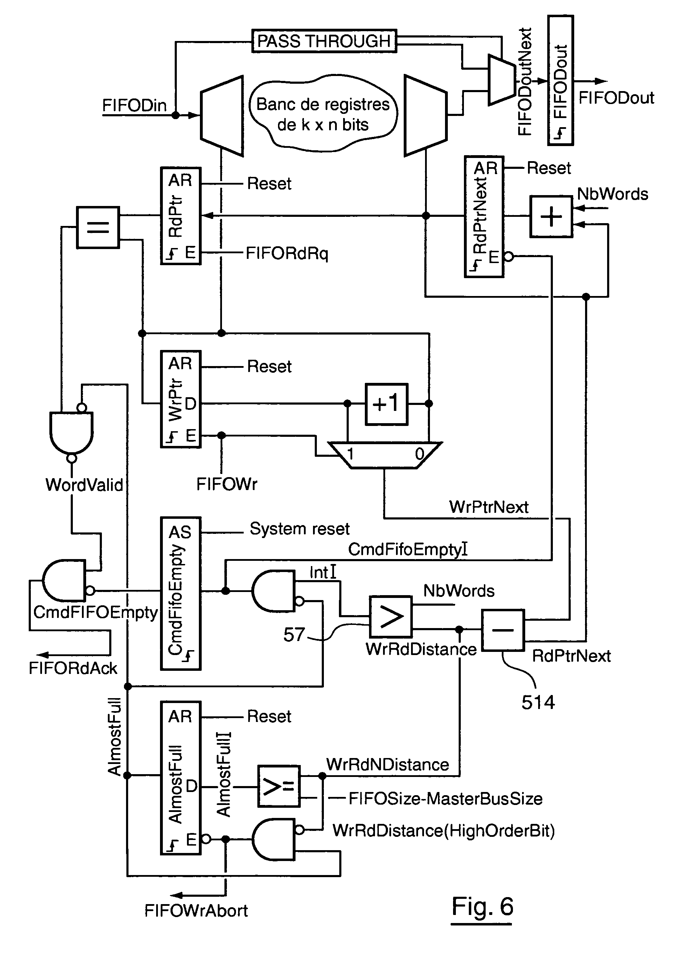

La **figure 6** est un schéma logique d'un second mode de réalisation particulier du dispositif d'interfaçage selon l'invention.

Cette variante du premier mode de réalisation présenté sur la figure 5 s'en distingue uniquement en ce que la seconde distance WrNRdNDistance (appelée WrRdDistance dans la suite de la description de cette variante) est utilisée à la place de la première distance WrNRdDistance, en entrée des moyens de comparaison référencés 57. Ceci permet de supprimer l'opérateur de soustraction référencé 56 sur la figure 6. En d'autres termes, on ne conserve que l'opérateur de soustraction référencé 514 sur la figure 6.

En effet, plutôt que de calculer deux distances : WrNRdNDistance et WrNRdDistance séparées pour la détermination dans un cas de l'état vide et dans l'autre cas de l'état plein du plan mémoire, on peut ne calculer qu'une distance : WrRdDistance qui est la distance entre le pointeur d'écriture anticipé et le pointeur de lecture anticipé. La distance résultante peut être utilisée à la place de WrNRdNDistance et de WrNRdDistance de manière équivalente au dispositif présenté Figure 5. En effet, dans le cas où le plan mémoire est vide, CmdFifoEmpty vaut '1'. RdPtrNext n'est donc plus remis à jour car l'entrée d'activation (Enable) complémentée du registre correspondant vaut '1'. Dans ce cas, on a RdPtrNext = RdPtr. Ceci économise un opérateur de soustraction pour réaliser un calcul de distance.

### 6.4 Illustration du caractère optimal

La **figure 4** est une représentation d'un exemple de remplissage d'un plan mémoire d'un dispositif d'interfaçage selon l'invention de taille 64 mots

Avec le dispositif d'interfaçage de l'invention (FIFO adaptative), on alloue à une instruction le nombre exact d'emplacements physiques de la mémoire qui sont nécessaires pour stocker les mots de cette instruction (pas de mot de bourrage).

On voit ainsi sur la figure 4 (exemple de remplissage d'un plan mémoire d'un dispositif d'interfaçage selon l'invention), par comparaison avec la figure 3 (exemple de remplissage d'un plan mémoire d'un dispositif d'interfaçage selon l'art antérieur), que dans le cas où les deux plans mémoires de même taille sont dans un état plein (64 mots utilisés), le plan mémoire du dispositif d'interfaçage selon l'invention contient plus de commandes que celui de l'art antérieur.

### 6.5 Détail du mécanisme de traversée directe (pass-through)

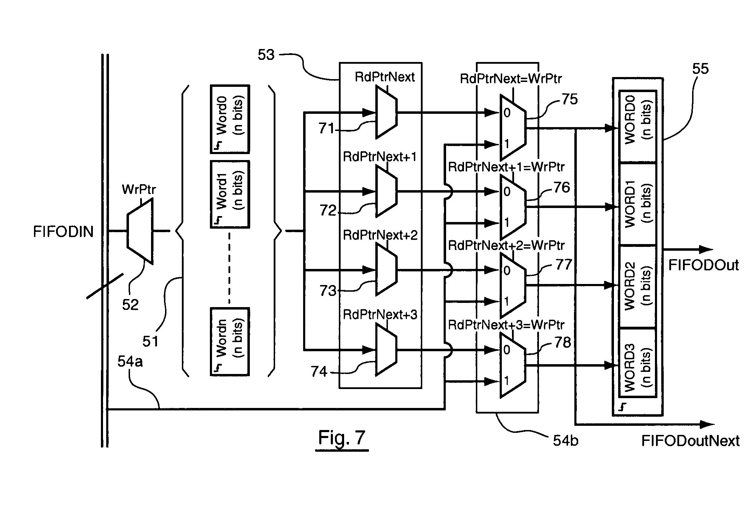

On présente maintenant plus en détail, en relation avec la **figure 7****,** le mécanisme précité de traversée directe (« pass-through ») apparaissant sur les figures 5 et 6.

On retrouve les éléments référencés 51, 52, 53, 54a, 54b et 55 sur la figure 5.

Le dispositif d'interfaçage comprend :
- des moyens 54b de détection de changement d'état, permettant de détecter un passage d'un état « mémoire vide » à un état « mémoire non vide » ;
- des moyens 54a de traversée directe, permettant de positionner des données présentes sur le bus d'entrée (FIFODin) directement en entrée (FIFODoutNext) du banc de registres de sortie, sans écriture préalable dans le plan mémoire, si les moyens de détection 54b effectuent une détection positive.

On notera que les moyens 54b de détection de changement d'état comprennent des multiplexeurs, référencés 75 à 78, dont les signaux de commande résultent de comparaisons basées sur la valeur courante (WrPtr) du pointeur d'écriture et la valeur anticipée (RdPtrNext) du pointeur de lecture.

On notera également, que les moyens d'accès en lecture (second décodeur d'adresse) 53 comprennent des multiplexeurs, référencés 71 à 74, dont les signaux de commande résultent de comparaisons basées sur la valeur anticipée (RdPtrNext) du pointeur de lecture. Ceci permet d'avoir des chemins de données courts.

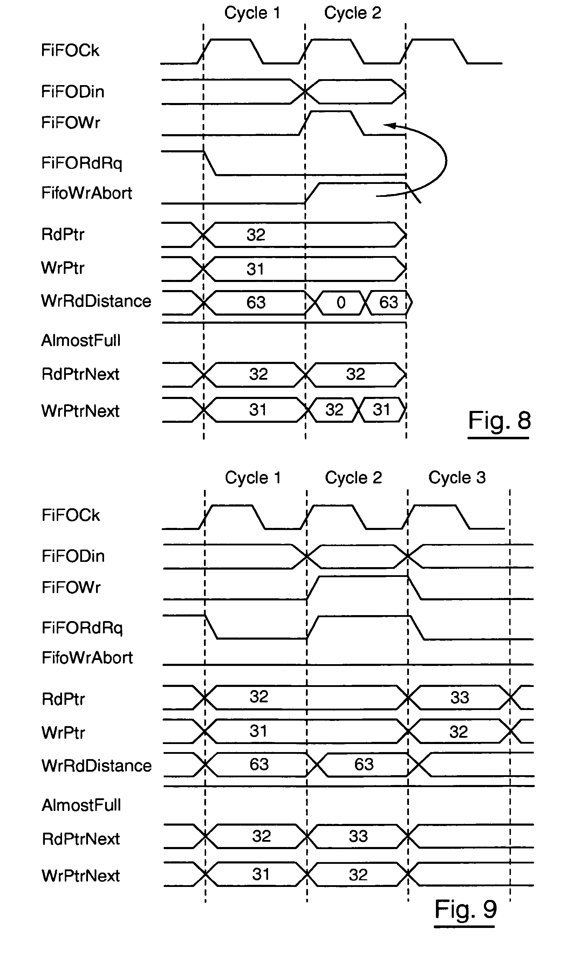

### 6.6 Discussion des chronogrammes de la figure 8

La **figure 8** présente des chronogrammes de signaux illustrant un exemple de passage à la valeur « vrai » du signal d'annulation d'écriture (FIFOWrAbort=1) généré par le dispositif d'interfaçage selon l'invention.

Le plan mémoire est géré comme une FIFO tournante. Le pointeur d'écriture précède toujours le pointeur de lecture car on ne doit lire que les données que l'on a écrite auparavant. On suppose dans cet exemple que le plan mémoire comporte 64 mots et on se place à un instant où RdPtr vaut 32 et WrPtr vaut 31 (le pointeur d'écriture va rattraper celui de lecture). On a alors écrit 64 mots et le plan mémoire est plein. Si on écrit une nouvelle donnée, alors on écrase la prochaine donnée à lire, il y a alors corruption du plan mémoire. Pendant le cycle 1, la distance calculée est de 63 (31 - 32 = 63 avec un opérateur de soustraction numérique dont les opérandes et sorties sont définis sur 7 bits). Pendant le cycle 2, une écriture est détectée (FIFOWr=1). WrPtrNext prend la valeur WrPtr + 1 et le calcul de la distance passe à 0. Cette distance est nulle de la même manière lorsque le plan mémoire est vide. Mais cette information couplée à AlmostFull qui vaut '1' indique que le plan mémoire est plein ce qui génère l'information FIFOWrAbort=1. Celle-ci est utilisée pour annuler l'opération d'écriture du maître en forçant le microprocesseur à être en mode repos (idle) ce qui se traduit par une descente de FIFOWr sur le front descendant du cycle 2 car dans cet exemple le mode repos du microcontrôleur est acquitté sur le front descendant. La descente de FIFOWr est donc la conséquence directe de l'information FIFOWrAbort=1. Le microprocesseur restera en mode repos tant que des lectures de l'esclave n'auront pas été effectuées et libéré un nombre de mots élémentaires au moins égal à la taille du bus d'entrée (FIFODin bus size).

### 6.7 Discussion des chronogrammes de la figure 9

La **figure 9** présente des chronogrammes de signaux illustrant un exemple de maintien à la valeur « faux » du signal d'annulation d'écriture (FIFOWrAbort=0) généré par le dispositif d'interfaçage selon l'invention.

Dans ce cas, le plan mémoire n'a plus d'espace libre car la distance est de 63. Pendant le cycle 2, une donnée est consommée par l'esclave pendant que le maître en fournit une. La prochaine valeur RdPtrNext du pointeur de lecture est incrémentée ainsi que la prochaine valeur WrPtrNext du pointeur d'écriture. La distance «WrPtrNext ― RdPtrNext » reste constante, donc FIFOWrAbort reste à l'état bas.

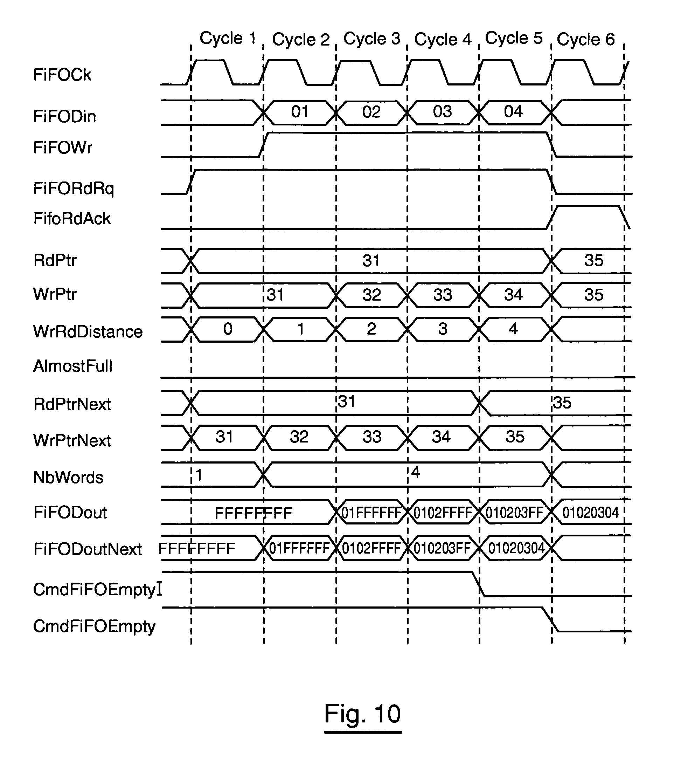

### 6.8 Discussion des chronogrammes de la figure 10

La **figure 10** présente des chronogrammes de signaux illustrant un exemple de passage à la valeur « vrai » du signal d'acquittement de lecture (FIFORdAck=1) généré par le dispositif d'interfaçage selon l'invention.

Au cycle 1, le plan mémoire est vide. Pendant les cycles 2, 3 et 4, on écrit des données dans la FIFO, la distance s'incrémente mais demeure inférieure à NbWords (ici NbWords=4). CmdFiFOEmptyI reste donc à '1'. Au cycle 5, WrRdDistance passe à 4. On a donc NbWords > WrRdDistance qui n'est plus vérifié. CmdFiFOEmptyI passe donc à '0' et au cycle 6 CmdFiFOEmpty passe également à '0'. Au cycle 6, FifoRdAck passe alors à '1'.

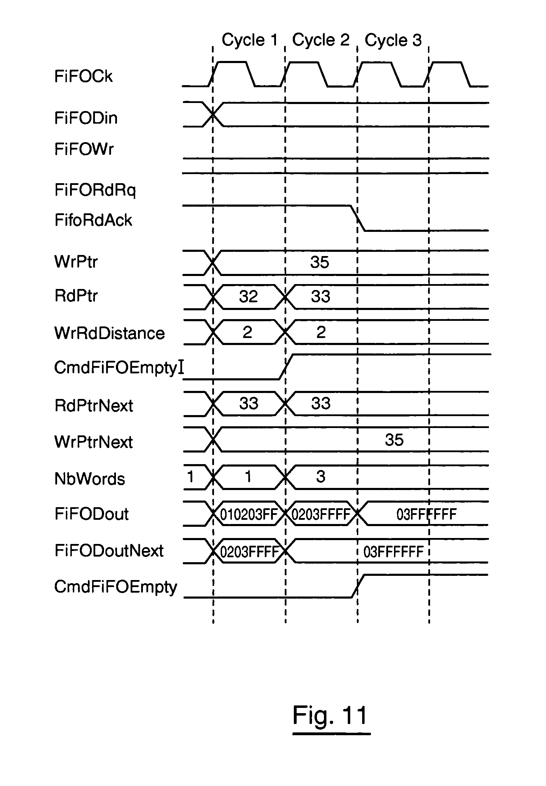

### 6.9 Discussion des chronogrammes de la figure 11

La **figure 11** présente des chronogrammes de signaux illustrant un exemple de passage à la valeur « faux » du signal d'acquittement de lecture (FIFORdAck=0) généré par le dispositif d'interfaçage selon l'invention.

On se place ici dans le cas du mode de réalisation de la figure 6 pour le calcul de distance : on ne calcule qu'une distance qu'on appelle WrRdDistance (distance entre les valeurs anticipées WrPtrNext et RdPtrNext des pointeurs d'écriture et de lecture).

Au cycle 1, le plan mémoire contient 3 mots. L'instruction dont l'opcode est "01" est en cours d'exécution. FiFODoutNext montre que l'opcode de la prochaine instruction à exécuter est "02" et on suppose que celle-ci à une taille de 1 mot. Au cycle 2, l'opcode de la prochaine instruction est "03" et on suppose que celle-ci comporte 3 mots. NbWords > WrRdDistance donc CmdFiFOEmptyI passe à '1'. Dès lors, RdPtrNext ne peut plus être mis à jour et WrRdDistance reste à 2. Au cycle 3, CmdFiFOEmptyI est échantillonné, CmdFiFOEmpty passe à '1', FifoRdAck passe alors à '0'.

### 6.10 Résumé des avantages de l'invention

### 6.10.1 Stockage/restitution d'instructions de taille variable

Dans le cas d'une application maître/esclave, le maître peut écrire une instruction (ou plus généralement un groupe de mots) bien formée en une ou plusieurs fois en fonction de la bande passante. Ainsi, dans l'exemple présenté ci-dessus, il écrit les mots un par un (la taille de FiFODin vaut 1). L'esclave attend que NbWords mots soient écrits pour considérer la donnée (c'est-à-dire l'instruction) bien formée.

On utilise alors des moyens de calcul anticipé, permettant de calculer la distance entre la valeur anticipée du pointeur d'écriture et la valeur courante du pointeur de lecture. Si cette distance est supérieure ou égale à NbWords, alors la donnée est considérée bien formée.

### 6.10.2 Ecriture des données réalisée indifféremment en une fois ou en plusieurs fois

Le maître utilise les moyens d'écriture pour remplir le plan mémoire. Ils sont composés d'un ou plusieurs multiplexeurs dont l'architecture et la taille dépendent de la largeur du bus d'entrée (bus d'écriture). L'écriture peut se faire en plusieurs fois par exemple si la taille de la donnée à écrire excède celle du bus d'écriture.

### 6.10.3 Disponibilité de la donnée en lecture instantanée aussitôt qu'elle est bien formée

De manière à optimiser l'utilisation du plan mémoire, la donnée doit être disponible immédiatement. Un système CPU/DSP fait fonctionner ce type de dispositif d'interfaçage (FIFO) la majeure partie du temps en régime transitoire. On souhaite donc ne pas pénaliser ce type de régime. Cela se produit lorsque l'on passe de l'état FIFO vide à FIFO pleine. Pour cela, on utilise un mécanisme de traversée directe (pass-through). Cela permet de faire traverser la donnée présente sur le bus FIFODin et la positionner directement dans les registres de sortie (signal de sortie FIFODout). Dans le cas de la figure 7, on a besoin de comparateurs d'adresse et de multiplexeurs pour écrire soit la donnée en provenance du plan mémoire soit les données présentes sur le bus FIFODin. Dans la section généricité ci-après, on revient sur la possibilité d'avoir un bus d'écriture de k x n bits, ce qui impose de comparer les adresses RdPtrNext/Wr, RdPtrNext/Wr+1 ... RdPtrNext/Wr+k pour chacun des registres de n bits de FIFODout.

Par ailleurs, en régime permanent, les données proviennent du plan mémoire. On utilise dans ce cas des mécanismes de calcul anticipé d'adresse de façon à échantillonner un coup d'horloge à l'avance la prochaine donnée qui sera lue.

### 6.10.4 Design supportant des fréquences de fonctionnement élevées

Les chemins critiques sont les chemins d'accès dans le plan mémoire et les chemins traversant les opérateurs de calcul des pointeurs. L'utilisation de calcul anticipé de l'adresse permet de faire de la lecture décalée de données. Celle-ci a une période d'horloge pour s'effectuer (traversée des moyens de lecture du plan mémoire). L'utilisation du calcul anticipé (registres RdPtrNext et WrPtrNext) permet d'avoir des chemins de données courts. On calcule la valeur anticipée RdPtrNext du pointeur de lecture de manière à accéder aux données du plan mémoire parallèlement au traitement de l'information FIFODout par le bloc esclave. En effet, l'accès aux données est long du fait de la traversée des multiplexeurs permettant la lecture.

### 6.11 Généricité

La technique de l'invention fonctionne pour toute taille de plan mémoire, dans la limite que le temps de traversée des décodeurs d'adresse soit inférieur à la période d'horloge du système.

Le bloc maître peut disposer de plusieurs bus d'écriture de tailles différentes de manière à optimiser les temps de chargement.

La taille de FIFODout peut comporter n mots élémentaires. Le nombre de comparateurs d'adresse et de multiplexeurs pour le mécanisme de traversée directe (pass-through) en est alors affecté.

Dans une variante de réalisation, les registres de sortie sont déportés dans le bloc esclave. Ce dernier reçoit alors seulement FIFODoutNext et calcule donc lui-même FIFODout en ré-échantillonnant FIFODoutNext.

## Revendications

1. Dispositif d'interfaçage (23), du type permettant un interfaçage unidirectionnel entre un bloc maître (21) et un bloc esclave (22), et comprenant :
- un plan mémoire (51) géré selon un mode « premier entré premier sorti », avec des pointeurs d'écriture et de lecture, et permettant de stocker des mots venant du bloc maître, via un bus d'entrée (FIFODin) ;
- un banc de registres de sortie (55) pouvant contenir des mots lus dans le plan mémoire, et fournissant un signal de sortie (FIFODout) pouvant être lu par le bloc esclave ;
- des moyens de réception de requêtes de lecture (FIFORdRq=1) provenant du bloc esclave et de requêtes d'écriture (FIFOWr=1) provenant du bloc maître, chaque requête de lecture requérant la lecture d'un groupe de mots ;
**caractérisé en ce qu'**il comprend en outre :
- des moyens de réception, pour chaque requête de lecture, de la taille (NbWords) du groupe de mots associé à ladite requête de lecture, ladite taille étant variable d'une requête de lecture à l'autre ;
- des moyens d'acquittement de requêtes de lecture, générant pour chaque requête de lecture un signal d'acquittement avec une valeur « vrai » (FIFORdAck=1) si un nombre de mots au moins égal à la taille (NbWords) du groupe de mots associé à ladite requête de lecture est disponible sur le signal de sortie (FIFODout) du banc de registres de sortie.

2. Dispositif d'interfaçage selon la revendication 1, **caractérisé en ce qu'**il comprend en outre des moyens de fourniture au bloc esclave d'un signal (FIFODoutNext) présent en entrée du banc de registres de sortie et qui est une valeur anticipée du signal de sortie (FIFODout) du banc de registres de sortie, de façon que, pendant que le dispositif d'interfaçage sert une requête de lecture courante, le bloc esclave puisse de manière anticipée obtenir une valeur présumée d'un groupe de mots associé à une requête de lecture suivante et fournir au dispositif d'interfaçage la taille (NbWords) du groupe de mots associé à ladite requête de lecture suivante.

3. Dispositif d'interfaçage selon l'une quelconque des revendications 1 et 2, **caractérisé en ce que** lesdits moyens d'acquittement comprennent :
- des moyens (56) de calcul d'une première distance (WrNRdDistance) entre d'une part une valeur anticipée (WrPtrNext), un coup d'horloge à l'avance, du pointeur d'écriture, et d'autre part une valeur courante (RdPtr) du pointeur de lecture ;
- des premiers moyens (57) de comparaison, permettant de comparer la taille (NbWords) du groupe de mots associé à une requête de lecture courante, avec ladite première distance, de sorte que si ladite taille n'est pas supérieure à ladite première distance, les premiers moyens de comparaison génèrent un signal combinatoire d'indication de mémoire vide avec une valeur « faux » (CmdFifoEmptyI=0) ;
- un premier registre intermédiaire (58) permettant d'échantillonner et bloquer ledit signal combinatoire d'indication de mémoire vide (CmdFifoEmptyl), pour fournir en sortie un signal séquentiel d'indication de mémoire vide (CmdFifoEmpty) ;
- des premiers moyens de décision (59), générant le signal d'acquittement avec la valeur « vrai » (FIFORdAck=1) si le premier registre intermédiaire fournit en sortie ledit signal séquentiel d'indication de mémoire vide avec la valeur « faux » (CmdFifoEmpty=0).

4. Dispositif d'interfaçage selon la revendication 3, **caractérisé en ce qu'**il comprend en outre des moyens de génération d'un signal séquentiel d'indication de mémoire presque pleine (AlmostFull),
et **en ce que** lesdits moyens d'acquittement comprennent en outre des deuxièmes moyens de décision(510), générant le signal combinatoire d'indication de mémoire vide avec la valeur « vrai » (CmdFifoEmptyI=1) seulement si ladite taille est supérieure à ladite première distance et si ledit signal séquentiel d'indication de mémoire presque pleine prend la valeur « faux » (AlmostFull=0).

5. Dispositif d'interfaçage selon la revendication 3, **caractérisé en ce que** lesdits moyens d'acquittement comprennent en outre des moyens de génération d'un signal de validité du calcul de la première distance (WordValid),
et **en ce que** lesdits premiers moyens de décision génèrent le signal d'acquittement avec la valeur « vrai » (FIFORdAck=1) si le ledit signal séquentiel d'indication de mémoire vide possède la valeur « faux » (CmdFifoEmpty=0) et si ledit signal de validité du calcul de la première distance possède la valeur « vrai » (WordValid=1).

6. Dispositif d'interfaçage selon la revendication 5, **caractérisé en ce qu'**il comprend en outre des moyens de génération d'un signal séquentiel d'indication de mémoire presque pleine (AlmostFull),
et **en ce que** lesdits moyens de génération d'un signal de validité du calcul de la première distance (WordValid) comprennent :
- des moyens (511) de détection d'un alignement des valeurs courantes (WrPtr, RdPtr) des pointeurs d'écriture et de lecture, générant un signal d'alignement avec la valeur « vrai » en cas d'alignement ;
- des troisièmes moyens de décision (513), générant ledit signal de validité du calcul de la première distance avec la valeur « faux » (WordValid=0) seulement si ledit signal d'alignement prend la valeur « vrai » et si ledit signal séquentiel d'indication de mémoire presque pleine prend la valeur « faux » (AlmostFull=0).

7. Dispositif d'interfaçage selon l'une quelconque des revendications 1 à 6, **caractérisé en ce qu'**il comprend en outre des moyens d'annulation de requêtes d'écriture, générant un signal d'annulation (FIFOWrAbort) et comprenant eux-mémes :
- des moyens de génération d'un signal séquentiel d'indication de mémoire presque pleine (AlmostFull) ;
- des moyens (514) de calcul d'une seconde distance (WrNRdNDistance) entre d'une part une valeur anticipée (WrPtrNext), un coup d'horloge à l'avance, du pointeur d'écriture, et d'autre part une valeur anticipée (RdPtrNext), un coup d'horloge à l'avance, du pointeur de lecture ;
- des quatrièmes moyens de décision (515), générant le signal d'annulation avec la valeur « vrai » (FIFOWrAbort=1) si le signal séquentiel d'indication de mémoire presque pleine prend la valeur « vrai » (AlmostFull=1) alors que ladite seconde distance (WrNRdNDistance) est presque nulle.

8. Dispositif d'interfaçage selon la revendication 7, **caractérisé en ce que** lesdits quatrièmes moyens de décision comprennent une porte logique ET (515) possédant :
- une première entrée inversée recevant le bit de poids fort de ladite seconde distance (WrNRdNDistance) ;
- une seconde entrée recevant ledit signal séquentiel d'indication de mémoire presque pleine (AlmostFull) ;
- une sortie délivrant ledit signal d'annulation (FIFOWrAbort).

9. Dispositif d'interfaçage selon l'une quelconque des revendications 4 et 6 à 8, **caractérisé en ce que** lesdits moyens de génération d'un signal séquentiel d'indication de mémoire presque pleine (AlmostFull) comprennent eux-mêmes :
- des ou lesdits moyens (514) de calcul d'une seconde distance (WrNRdNDistance) entre d'une part une valeur anticipée (WrPtrNext), un coup d'horloge à l'avance, du pointeur d'écriture, et d'autre part une valeur anticipée (RdPtrNext), un coup d'horloge à l'avance, du pointeur de lecture ;
- des seconds moyens de comparaison (516), permettant de comparer ladite seconde distance avec une valeur seuil déterminée, de sorte que si ladite seconde distance est supérieure ou égale à ladite valeur seuil, les seconds moyens de comparaison génèrent un signal combinatoire d'indication de mémoire presque pleine avec une valeur « vrai » (AlmostFulll=1) ;
- un deuxième registre intermédiaire (517) permettant d'échantillonner et bloquer ledit signal combinatoire d'indication de mémoire presque pleine (AlmostFullI), pour fournir en sortie ledit signal séquentiel d'indication de mémoire presque pleine (AlmostFull).

10. Dispositif d'interfaçage selon la revendication 9, **caractérisé en ce que** ladite valeur seuil déterminée est égale à la différence entre la taille du plan mémoire et la taille du bus d'entrée (FIFODin).

11. Dispositif d'interfaçage selon les revendications 7 et 9, **caractérisé en ce que** ledit second registre intermédiaire possède une entrée d'activation (E) inversée recevant ledit signal d'annulation (FIFOWrAbort).

12. Dispositif d'interfaçage selon l'une quelconque des revendications 3 à 11, **caractérisé en ce qu'**il comprend :
- un troisième registre intermédiaire (518), permettant d'échantillonner et bloquer une valeur combinatoire du pointeur d'écriture (WrPtrI), pour fournir en sortie ladite valeur courante (WrPtr) du pointeur d'écriture, ledit troisième registre intermédiaire possédant une entrée d'activation (E) recevant le signal (FIFOWr) portant lesdites requêtes d'écriture ;
- des premiers moyens d'incrémentation (519), recevant ladite valeur courante (WrPtr) du pointeur d'écriture et appliquant un pas d'incrémentation égal à la taille du bus d'entrée (FIFODin), pour fournir ladite valeur combinatoire du pointeur d'écriture (WrPtrI) ;
- des premiers moyens de multiplexage (520), générant ladite valeur anticipée (WrPtrNext) du pointeur d'écriture et possédant des première et seconde entrées recevant respectivement ladite valeur courante (WrPtr) du pointeur d'écriture et ladite valeur combinatoire du pointeur d'écriture (WrPtrl), et une entrée de commande recevant le signal (FIFOWr) portant lesdites requêtes d'écriture, de sorte que ladite valeur anticipée (WrPtrNext) du pointeur d'écriture est égale à ladite valeur combinatoire du pointeur d'écriture (WrPtrI) si l'entrée de commande reçoit une requête d'écriture (FIFOWr=1) ou à ladite valeur courante (WrPtr) du pointeur d'écriture si l'entrée de commande ne reçoit pas une requête d'écriture (FIFOWr=0),

13. Dispositif d'interfaçage selon l'une quelconque des revendications 1 à 12, **caractérisé en ce qu'**il comprend des moyens (53) d'accès en lecture au plan mémoire, utilisant pour chaque accès en lecture une valeur anticipée (RdPtrNext), un coup d'horloge à l'avance, du pointeur de lecture.

14. Dispositif d'interfaçage selon l'une quelconque des revendications 7 à 13, **caractérisé en ce qu'**il comprend :
- un quatrième registre intermédiaire (522), permettant d'échantillonner et bloquer ladite valeur anticipée du pointeur de lecture (RdPtrNext), pour fournir en sortie ladite valeur courante (RdPtr) du pointeur de lecture, ledit quatrième registre intermédiaire possédant une entrée d'activation (E) recevant le signal (FIFORdRq) portant lesdites requêtes de lecture ;
- un cinquième registre intermédiaire (521), permettant d'échantillonner et bloquer une valeur anticipée intermédiaire (RdPtrNextI) du pointeur de lecture, pour fournir en sortie ladite valeur anticipée (RdPtrNext) du pointeur de lecture ;
- des moyens d'addition (523), permettant d'additionner ladite valeur anticipée (RdPtrNext) du pointeur de lecture et la taille (NbWords) du groupe de mots associé à une requête de lecture courante, pour générer ladite valeur anticipée intermédiaire (RdPtrNextI) du pointeur de lecture.

15. Dispositif d'interfaçage selon les revendications 3 et 14, **caractérisé en ce que** ledit cinquième registre intermédiaire possède une entrée d'activation (E) inversée recevant ledit signal combinatoire d'indication de mémoire vide (CmdFifoEmptyI).

16. Dispositif d'interfaçage selon la revendication 15, **caractérisé en ce que** lesdits moyens (56) de calcul d'une première distance (WrNRdDistance) sont remplacés par lesdits moyens (514) de calcul d'une seconde distance (WrNRdNDistance), de sorte que ladite seconde distance (WrNRdNDistance) est utilisée à la place de ladite première distance (WrNRdDistance).

17. Dispositif d'interfaçage selon l'une quelconque des revendications 1 à 16, **caractérisé en ce qu'**il comprend en outre :
- des moyens (54b) de détection de changement d'état, permettant de détecter un passage d'un état « mémoire vide » à un état « mémoire non vide » ;
- des moyens (54a) de traversée directe (pass-trough), permettant de positionner des données présentes sur le bus d'entrée (FIFODin) directement en entrée (FIFODoutNext) du banc de registres de sortie, sans écriture préalable dans le plan mémoire, si lesdits moyens de détection effectuent une détection positive.

18. Dispositif d'interfaçage selon la revendication 17, **caractérisé en ce que** lesdits moyens de détection de changement d'état effectuent des comparaisons basées sur une valeur courante (WrPtr) du pointeur d'écriture et une valeur anticipée (RdPtrNext), un coup d'horloge à l'avance, du pointeur de Lecture.

19. Dispositif d'interfaçage selon l'une quelconque des revendications 1 à 18, **caractérisé en ce que** ledit banc de registres de sortie (55) est déporté dans le bloc esclave.

20. Dispositif d'interfaçage selon l'une quelconque des revendications 1 à 19, **caractérisé en ce que** le bloc maître (21) est un microprocesseur, **en ce que** le bloc esclave (22) est un co-processeur et **en ce que** chaque groupe de mots, dont la lecture est requise par une requête de lecture, comprend un mot de code opération (opcode) et N mots d'opérande, avec N≥0.

21. Bloc esclave (22), du type destiné à coopérer avec un bloc maître (21), via un dispositif d'interfaçage unidirectionnel (23), ledit bloc esclave comprenant :
- des moyens de transmission de requêtes de lecture (FIFORdRq=1) vers le dispositif d'interfaçage, chaque requête de lecture requérant la lecture d'un groupe de mots ;
- des moyens de lecture d'un signal de sortie (FIFODout) d'un banc de registres de sortie pouvant contenir des mots lus dans un plan mémoire du dispositif d' i nterfaçage ;
**caractérisé en ce qu'**il comprend en outre :
- des moyens de transmission, pour chaque requête de lecture, de la taille (NbWords) du groupe de mots associé à ladite requête de lecture, ladite taille étant variable d'une requête de lecture à l'autre ;
- des moyens de réception, pour chaque requête de lecture, d'un signal d'acquittement (FIFORdAck) provenant du dispositif d'interfaçage et possédant une valeur « vrai » (FIFORdAck=1) si un nombre de mots au moins égal à la taille (NbWords) du groupe de mots associé à ladite requête de lecture est disponible sur le signal de sortie (FIFODout) du banc de registres de sortie.

22. Bloc esclave selon la revendication 21, **caractérisé en ce qu'**il comprend en outre :
- des moyens de réception d'un signal (FIFODoutNext) présent en entrée du banc de registres de sortie et qui est une valeur anticipée du signal de sortie (FIFODout) du banc de registres de sortie ;
- des moyens d'obtention, à partir dudit signal (FIFODoutNext) présent en entrée du banc de registres de sortie, d'une valeur présumée d'un groupe de mots associé à une requête de lecture suivante, pendant que le dispositif d'interfaçage sert une requête de lecture courante ;
- des moyens d'obtention et de transmission au dispositif d'interfaçage de la taille (NbWords) du groupe de mots associé à ladite requête de lecture suivante.

23. Bloc esclave selon l'une quelconque des revendications 21 et 22, **caractérisé en ce qu'**il comprend ledit banc de registres de sortie.

24. Bloc esclave selon l'une quelconque des revendications 21 à 23, **caractérisé en ce que** c'est un co-processeur et **en ce que** chaque groupe de mots, dont la lecture est requise par une requête de lecture, comprend un mot de code opération (opcode) et N mots d'opérande, avec N≥0.

## Claims

1. Interfacing device (23), of the type enabling one-way interfacing between a master unit (21) and a slave unit (22), and comprising:
- a memory plane (51) managed according to a "first in, first out" mode, with write and read pointers, and making it possible to store words coming from the master unit, via an input bus (FIFODin);
- a bank of output registers (55) capable of containing words read in the memory plane and providing an output signal (FIFODout) capable of being read by the slave unit;
- means of receiving read requests (FIFORdRq=1) coming from the slave unit and write requests (FIFOWr=1) coming from the master unit, each read request requiring the reading of a word group.
**characterised in that** it further includes:
- means of receiving, for each read request, the size (NbWords) of the word group associated with said read request, said size being variable from one read request to the other; and
- means of acknowledging read requests, generating, for each read request, an acknowledgement signal with a "true" value (FIFORdAck=1) if a number of words at least equal to the size (NbWords) of the word group associated with said read request is available on the output signal (FIFODout) of the bank of output registers.

2. Interfacing device of claim 1, **characterised in that** it further includes means of providing the slave unit with a signal (FIFODoutNext) present at the input of the bank of output registers, and which is an anticipated value for the output signal (FIFODout) of the bank of output registers, so that, while the interfacing device is serving an active read request, the slave unit might obtain, in an anticipatory way, an assumed value of a word group associated with a next read request and provide the interfacing device with the size (NbWords) of the word group associated with said next read request.

3. Interfacing device as claimed in any of claims 1 and 2, **characterised in that** said acknowledgement means include:
- means (56) of computing a first distance (WrNRdDistance) between, on the one hand, an anticipated value (WrPtrNext) of the write pointer, an advance clock stroke, and, on the other hand, an active value (RdPtr) of the read pointer;
- first means (57) of comparison, making it possible to compare the size (NbrWords) of the word group associated with an active read request, with said first distance, so that if said size is not greater than said first distance, the first means of comparison generate a combinatorial memory empty indication signal with a "false" value (CmdFifoEmptyI=0);
- a first intermediate register (58) making it possible to sample and block said combinatorial memory empty indication signal (CmdFiifoEmptyI), in order to provide at its output a sequential memory empty indication signal (CmdFifoEmpty);
- first means of decision (59) generating the acknowledgement signal with the "true" value (FIFORdAck=1), if the first intermediate register provides at its output said sequential memory empty indication signal with the "false" value (CmdFifoEmpty=0) .

4. Interfacing device of claim 3, **characterised in that** it further includes means of generating a sequential, almost full memory indication signal (AlmostFull),
and **in that** said acknowledgement means further include second means of decision (510) generating the combinatorial memory empty indication signal with the "true" value (CmdFifoEmptyI=1) only if said size is greater than said first distance and if said sequential almost full memory indication signal assumes the "false" value (AlmostFull=0).

5. Interfacing device of claim 3, **characterised in that** said acknowledgement means further include means of generating a validity signal for the computation of the first distance (WordValid) ,
and **in that** said first means of decision generate the acknowledgement signal with the "true" value (FIFORdAck=1) if said sequential, memory empty indication signal has the "false" value (CmdFifoEmpty=0) and if said validity signal for the computation of the first distance has the "true" value (WordValid=1) .

6. Interfacing device of claim 5, **characterised in that** it further includes means of generating a sequential, almost full memory indication signal (AlmostFull),
and **in that** said means of generating a validity signal for the computation of the first distance (WordValid) include:
- means (511) of detecting an alignment of the active values (WrPtr, RdPtr) for the write and read pointers, generating an alignment signal with the "true" value, in the case of alignment;
- third means of decision (513) generating said validity signal for the computation of the first distance with the "false" value (WordValid=0) only if said alignment signal assumes the "true" value and if said sequential, almost full memory indication signal assumes the "false" value (AlmostFull=0).

7. Interfacing device as claimed in any of claims 1 to 6, **characterised in that** it further includes means of aborting write requests, generating an abort signal (FIFOWrAbort) and themselves include:
- means of generating a sequential, almost full memory indication signal (AlmostFull);
- means (514) of computing a second distance (WrNRdNDistance) between, on the one hand, an anticipated value (WrPtrNext) of the write pointer, an advance clock stroke, and, on the other hand, an anticipated value (RdPtrNext) of the read pointer, an advance clock stroke;
- fourth means of decision (515), generating an abort signal with the "true" value (FIFOWrAbort=1) if the sequential, almost full memory indication signal assumes the "true" value (AlmostFull=l) while said second distance (WrNRdNDistance) is near zero.

8. Interfacing device of claim 7, **characterised in that** said fourth means of decision include a logic gate AND (515) having:
- a first inverted input receiving the high-order bit of said second distance (WrNRdNDistance);
- a second input receiving said sequential, almost full memory indication signal (AlmostFull);
- an output issuing said abort signal (FIFOWrAbort).

9. Interfacing device as claimed in any of claims 4 and 6 to 8, **characterised in that** said means of generating a sequential, almost full memory indication signal (AlmostFull) themselves include:
- means or said means (514) of computing a second distance (WrNRdNDistance) between, on the one hand, an anticipated value (WrPtrNext) of the write pointer, and advance clock stroke, and, on the other hand, an anticipated value (RdPtrNext) of the read pointer, an advance clock stroke;
- second means of comparison (516), making it possible to compare said second distance with a determined threshold value, so that, if said second distance is greater than or equal to said threshold value, the second means of comparison generate a combinatorial, memory almost full indication signal with a "true" value (AlmostFullI=1);
- a second intermediate register (517) making it possible to sample and block said combinatorial, memory almost full indication signal (AlmostFullI), in order to provide at its output said sequential, memory almost full indication signal (AlmostFull).

10. Interfacing device of claim 9, **characterised in that** said determined threshold value is equal to the difference between the size of the memory plane and the size of the input bus (FIFODin).

11. Interfacing device as claimed in claims 7 and 9, **characterised in that** said second intermediate register has an inverted activation input (E) receiving said abort signal (FIFOWrAbort).

12. Interfacing device as claimed in any of claims 3 to 11, **characterised in that** it includes:
- a third intermediate register (518), making it possible to sample and block a combinatorial value of the write pointer (WrPtrI), in order to provide at its output said active value (WrPtr) of the write pointer, said third intermediate register having an activation input (E) receiving the signal (FIFOWr) carrying said write requests;
- first means of incrementation (519) receiving said active value (WrPtr) of the write pointer and applying an incrementation step equal to the size of the input bus (FIFODin), in order to provide said combinatorial value of the write pointer (WrPtrI);
- first multiplexing means (520) generating said anticipated value (WrPtrNext) of the write pointer and having first and second inputs receiving, respectively, said active value (WrPtr) of the write pointer and said combinatorial value of the write pointer (WrPtrI), and a control input receiving the signal (FIFOWr) carrying said write requests, so that said anticipated value (WrPtrNext) of the write pointer is equal to said combinatorial value of the write pointer (WrPtrI), if the control input receives a write request (FIFOWr=1), or to said active value (WrPtr) of the write pointer, if the control input does not receive a write request (FIFOWr=0).

13. Interfacing device as claimed in any of claims 1 to 12, **characterised in that** it includes means (53) of accessing the memory plane during reading, using, for each read access, an anticipated value (RdPtrNext) of the read pointer, an advance clock stroke.

14. Interfacing device as claimed in any of claims 7 to 13, **characterised in that** it includes:
- a fourth intermediate register (522) making it possible to sample and block said anticipated value of the read pointer (RdPtrNext), in order to provide at its output said active value (RdPtr) of the read pointer, said fourth intermediate register having an activation input (E) receiving the signal (FIFORdRq) carrying said read requests;
- a fifth intermediate register (521) making it possible to sample and block an anticipated intermediate value (RdPtrNextI) of the read pointer, in order to provide at its output said anticipated value (RdPtrNext) of the read pointer;
- means of addition (523), making it possible to add said anticipated value (RdPtrNext) of the read pointer and the size (NbWords) of the word group associated with an active read request, in order to generate said anticipated intermediate value (RdPtrNextI) of the read pointer.

15. Interfacing device as claimed in claims 3 and 14, **characterised in that** said fifth intermediate register has an inverted activation input (E) receiving said combinatorial, memory empty indication signal (CmdFifoEmptyI).

16. Interfacing device of claim 15, **characterised in that** said means (56) of computing a first distance (WrNRdDistance) are replaced by said means (514) of computing a second distance (WrNRdNDistance), so that said second distance (WrNRdNDistance) is used in place of said first distance (WrNRdDistance).

17. Interfacing device as claimed in any of claims 1 to 16, **characterised in that** it further includes:
- means (54b) of detecting a change of state, making it possible to detect a passage from a "memory empty" state to a "non-empty memory" state;
- direct pass-through means (54a), making it possible to position data present on the input bus (FIFODin) directly at the input (FIFODoutNext) of the bank of output registers, without previously being written into the memory plane, if said means of detection make a positive detection.

18. Interfacing device of claim 17, **characterised in that** said means of detecting a change of state perform comparisons based on an active value (WrPtr) of the write pointer and an anticipated value (RdPtrNext) of the read pointer, an advance clock stroke.

19. Interfacing device as claimed in any of claims 1 to 18, **characterised in that** said bank of output registers (55) is transferred to the slave unit.

20. Interfacing device as claimed in any of claims 1 to 19, **characterised in that** the master unit (21) is a microprocessor, **in that** the slave unit (22) is a co-processor and **in that** each word group for which reading is requested by a read request includes an operation code word (opcode) and N operand words, with N≥0.

21. Slave unit (22), of the type designed to cooperate with a master unit (21) via a one-way interfacing device (23), said slave unit comprising:
- means of transmitting read requests (FIFORdRq=1) to the interfacing device, each read request requiring the reading of a word group;
- means of reading an output signal (FIFODout) of a bank of output registers capable of containing words read in a memory plane of the interfacing device.
**characterised in that** it further includes:
- means of transmitting, for each read request, the size (NbWords) of the word group associated with said read request, said size being variable from one read request to the other; and
- means of receiving, for each read request, an acknowledgement signal (FIFORdAck) coming from the interfacing device and having a "true" value (FIFORdAck=1) if a number of words at least equal to the size (NbWords) of the word group associated with said read request is available on the output signal (FIFODout) of the bank of output registers.

22. Slave unit of claim 21, **characterised in that** it further includes:
- means of receiving a signal (FIFODoutNext) present at the input of the bank of output registers, and which is an anticipated value for the output signal (FIFODout) of the bank of output registers;
- means of obtaining, from said signal (FIFODoutNext) present at the input of the bank of output registers, an assumed value for a word group associated with a next read request, while the interfacing device serves an active read request;
- means of obtaining and transmitting to the interfacing device the size (NbWords) of the word group associated with said next read request.

23. Slave unit as claimed in any of claims 21 and 22, **characterised in that** it includes said bank of output registers.

24. Slave unit as claimed in any of claims 21 to 23, **characterised in that** it is a co-processor and **in that** each word group whose reading is requested by a read request includes an operation code word (opcode) and N operand words, with N≥0.

## Patentansprüche

1. Vorrichtung zur Schnittstellenbildung (23) des Typs, der ein unidirektionales Schnittstellenbilden zwischen einem Masterblock (21) und einem Slaveblock (22) erlaubt und Folgendes aufweist:
- eine Speicherebene (51), die gemäß einem FIFO-Betrieb verwaltet ist, mit Schreib- und Lesezeigern, und die das Speichern von Wörtern erlaubt, die vom Masterblock über einen Eingangsbus (FIFODin) kommen;
- eine Ausgangsregisterbank (55), die Wörter enthalten kann, die in der Speicherebene gelesen werden, und ein Ausgangssignal (FIFODout) liefert, das von dem Slaveblock gelesen werden kann;
- Mittel zum Empfangen von Leseanfragen (FIFORdRq=1), die von dem Slaveblock kommen, und von Schreibanfragen (FtFOWr=1), die vom Masterblock kommen, wobei jede Leseanfrage das Lesen einer Wörtergruppe fordert;
**dadurch gekennzeichnet, dass** sie Folgendes aufweist:
- Mittel zum Empfangen für jede Leseanfrage mit der Größe (NbWords) der Wörtergruppe, die zu der Leseanfrage gehört, wobei die Größe von einer Leseanfrage zur anderen variabel ist;
- Mittel zum Quittieren von Leseanfragen, die für jede Leseanfrage ein Quittierungssignal mit einem Wert "wahr" (FIFORdAck=1) erzeugen, wenn eine Anzahl von Wörtern mindestens gleich der Größe (NbWords) der Wörtergruppe, die zu der Leseanfrage gehört, auf dem Ausgangssignal (FIFODout) der Registerbank verfügbar ist.

2. Vorrichtung zur Schnittstellenbildung nach Anspruch 1, **dadurch gekennzeichnet, dass** sie ferner Mittel zum Liefern an den Slaveblock eines Signals (FIFODoutNext), das am Eingang der Ausgangsregisterbank verfügbar ist und ein vorweggenommener Wert des Ausgangssignals (FIFODout) der Ausgangsregisterbank ist, derart aufweist, dass, während die Vorrichtung zur Schnittstellenbildung eine aktuelle Leseanfrage verarbeitet, der Slaveblock frühzeitig einen vermutlichen Wert einer Wörtergruppe, die zu einer darauf folgenden Leseanfrage gehört, erzielen kann, und der Vorrichtung zur Schnittstellenbildung die Größe (NbWords) der Wörtergruppe, die zu der darauf folgenden Leseanfrage gehört, liefern kann.

3. Vorrichtung zur Schnittstellenbildung nach einem der Ansprüche 1 und 2, **dadurch gekennzeichnet, dass** die Quittierungsmittel Folgendes aufweisen:
- Mittel (56) zum Berechnen einer ersten Entfernung (WrNRdDistance) zwischen einerseits einem vorweggenommenen Wert (WrPtrNext), einen Taktgeberschlag im Voraus, des Schreibzeigers, und andererseits einem laufenden Wert (RdPtr) des Lesezeigers;
- erste Mittel (57) zum Vergleichen, die es erlauben, die Größe (NbWords) der Wörtergruppe, die zu einer laufenden Leseanfrage gehört, mit der ersten Entfernung zu vergleichen, so dass, wenn die Größe nicht größer ist als die erste Entfernung, die ersten Vergleichsmittel ein kombinatorisches Signal zum Anzeigen eines leeren Speichers mit einem "unwahren" Wert (CmdFifoEmptyl=O) erzeugen;
- ein erstes Zwischenregister (58), das es erlaubt, das kombinatorische Signal zum Anzeigen eines leeren Speichers (CmdFifoEmptyl) abzutasten und zu blockieren, um am Ausgang ein sequenzielles Signal zum Anzeigen eines leeren Speichers (CmdFifoEmpty) zu liefern;
- erste Beschlussfassungsmittel (59), die das Quittierungssignal mit dem Wert "wahr" (FIFORdAck=1) erzeugen, wenn das erste Zwischenregister am Ausgang das sequenzielle Signal zum Anzeigen eines leeren Speichers mit dem Wert "unwahr" (CmdFifoEmpty=0) liefert.

4. Vorrichtung zur Schnittstellenbildung nach Anspruch 3, **dadurch gekennzeichnet, dass** sie ferner Mittel zum Erzeugen eines sequenziellen Signals zum Anzeigen eines fast vollen Speichers (AlmostFull) aufweist,
und dass die Quittierungsmittel ferner zweite Beschlussfassungsmittel (510) aufweisen, die das kombinatorische Signal zum Anzeigen eines leeren Speichers mit dem Wert "wahr" (CmdFifoEmptyl=1) nur dann liefern, wenn die Größe größer ist als die erste Entfernung, und wenn das sequenzielle Signal zum Anzeigen eines fast vollen Speichers den Wert "unwahr" (Almostfull=0) annimmt.

5. Vorrichtung zur Schnittstellenbildung nach Anspruch 3, **dadurch gekennzeichnet, dass** die Quittierungsmittel ferner Mittel zum Erzeugen eines Gültigkeitssignals der Berechnung der ersten Entfernung (WordValid) aufweisen,
und dass die ersten Beschlussfassungsmittel das Quittierungssignal mit dem Wert "wahr" (FIFORdAck=1) erzeugen, wenn das sequenzielle Signal zum Anzeigen eines leeren Speichers den Wert "unwahr" (CmdFifoEmpty=0) besitzt, und wenn das Gültigkeitssignal der Berechnung der ersten Entfernung den Wert "wahr" (WordValid=1) besitzt.

6. Vorrichtung zur Schnittstellenbildung nach Anspruch 5, **dadurch gekennzeichnet, dass** sie ferner Mittel zum Erzeugen eines sequenziellen Signals zum Anzeigen eines fast vollen Speichers (AlmostFull) aufweist,
und dass die Mittel zum Erzeugen eines Gültigkeitssignals der Berechnung der ersten Entfernung (WordValid) Folgendes aufweisen:
- Mittel (511) zum Erfassen einer Ausrichtung der laufenden Werte (WrPtr, RdPtr) der Schreib- und Lesezeiger, die ein Signal des Ausrichtens mit dem Wert "wahr" im Fall des Ausrichtens erzeugen;
- dritte Beschlussfassungsmittel (513), die das Gültigkeitssignal der Berechnung der ersten Entfernung mit dem Wert "unwahr" (Wordvalid=0) nur erzeugen, wenn das Ausrichtungssignal den Wert "wahr" annimmt, und wenn das sequenzielle Signal zum Anzeigen eines fast vollen Speichers den Wert "unwahr" (Almostfull=0) annimmt.

7. Vorrichtung zur Schnittstellenbildung nach einem der Ansprüche 1 bis 6, **dadurch gekennzeichnet, dass** sie ferner Mittel zum Annullieren von Schreibanfragen aufweist, die ein Annullierungssignal (FIFOWrAbort) erzeugen und selbst Folgendes aufweisen:
- Mittel zum Erzeugen eines sequenziellen Signals zum Anzeigen eines fast vollen Speichers (AlmostFull);
- Mittel (514) zum Berechnen einer zweiten Entfernung (WrNRdNDistance) zwischen einerseits einem vorweggenommenen Wert (WrPtrNext), einen Taktgeberschlag im Voraus, des Schreibzeigers und andererseits einem vorweggenommenen Wert (RdPtrNext), einen Taktgeberschlag im Voraus, des Lesezeigers;
- vierte Beschlussfassungsmittel (515), die das Annullierungssignal mit dem Wert "wahr" (FIFOWrAbort=1) erzeugen, wenn das sequenzielle Signal zum Anzeigen eines fast vollen Speichers den Wert "wahr" (AlmostFull=1) annimmt, während die zweite Entfernung (WrNRdNDistance) fast gleich Null ist.

8. Vorrichtung zur Schnittstellenbildung nach Anspruch 7, **dadurch gekennzeichnet, dass** die vierten Beschlussfassungsmittel ein Logikgatter UND (515) aufweisen, das Folgendes besitzt:
- einen ersten umgekehrten Eingang, der das höherwertige Bit der zweiten Entfernung (WrNRdNDistance) empfängt;
- einen zweiten Eingang, der das sequenzielle Signal zum Anzeigen eines fast vollen Speichers (AlmostFull) empfängt;
- einen Ausgang, der das Annullierungssignal (FIFOWrAbort) ausgibt.

9. Vorrichtung zur Schnittstellenbildung nach einem der Ansprüche 4 und 6 bis 8, **dadurch gekennzeichnet, dass** die Mittel zum Erzeugen eines sequenziellen Signals zum Anzeigen eines fast vollen Speichers (AlmostFull) selbst Folgendes aufweisen:
- ein oder mehrere Mittel (514) zum Berechnen einer zweiten Entfernung (WrNRdNDistance) zwischen einerseits einem vorweggenommenen Wert (WrPTrNext), einen Taktgeberschlag im Voraus, des Schreibzeigers und andererseits einem vorweggenommenen Wert (RdPtrNext), einen Taktgeberschlag im Voraus, des Lesezeigers;
- zweite Vergleichsmittel (516), die es erlauben, die zweite Entfernung mit einem bestimmten Schwellenwert zu vergleichen, so dass, wenn die zweite Entfernung größer oder gleich dem Schwellenwert ist, die zweiten Vergleichsmittel ein kombinatorisches Signal zum Anzeigen eines fast vollen Speichers mit dem Wert "wahr" (AlmostFulll=1) erzeugen;
- ein zweites Zwischenregister (517), das es erlaubt, das kombinatorische Signal zum Anzeigen eines fast vollen Speichers (AlmostFulll) abzutasten und zu blockieren, um am Ausgang das sequenzielle Signal zum Anzeigen eines fast vollen Speichers (AlmostFull) zu liefern.

10. Vorrichtung zur Schnittstellenbildung nach Anspruch 9, **dadurch gekennzeichnet, dass** der bestimmte Schwellenwert gleich dem Unterschied zwischen der Größe der Speicherebene und der Größe des Eingangsbusses (FIFODin) ist.

11. Vorrichtung zur Schnittstellenbildung nach den Ansprüchen 7 und 9, **dadurch gekennzeichnet, dass** das zweite Zwischenregister einen umgekehrten Aktivierungseingang (E) besitzt, der das Annullierungssignal (FIFOWrAbort) empfängt.

12. Vorrichtung zur Schnittstellenbildung nach einem der Ansprüche 3 bis 11, **dadurch gekennzeichnet, dass** sie Folgendes aufweist:
- ein drittes Zwischenregister (518), das es erlaubt, einen kombinatorischen Wert des Schreibzeigers (WrPtrl) abzutasten und zu blockieren, um am Ausgang den laufenden Wert (WrPtr) des Schreibzeigers zu liefern, wobei das dritte Zwischenregister einen Aktivierungseingang (E) aufweist, der das Signal (FIFOWr) empfängt, das die Schreibanfragen trägt;
- erste Inkrementierungsmittel (519), die den laufenden Wert (WrPtr) des Schreibzeigers empfangen und einen Inkrementierungsschritt gleich der Größe des Eingangsbusses (FIFODin) anlegen, um den kombinatorischen Wert des Schreibzeigers (WrPtrl) zu liefern;
- erste Multiplexmittel (520), die den vorweggenommenen Wert (WrPtrNext) des Schreibzeigers erzeugen und einen ersten und einen zweiten Eingang aufweisen, die jeweils den laufenden Wert (WrPtr) des Schreibzeigers und den kombinatorischen Wert des Schreibzeigers (WrPtrl) empfangen, und einen Steuereingang, der das Signal (FIFOWr) empfängt, das die Schreibanfragen trägt, so dass der vorweggenommene Wert (WrPtrNext) des Schreibzeigers gleich dem kombinatorischen Wert des Schreibzeigers (WrPtrl) ist, wenn der Steuereingang eine Schreibanfrage (FIFOWr=1) empfängt, oder gleich dem laufenden Wert (WrPtr) des Schreibzeigers, wenn der Steuereingang keine Schreibanfrage (FIFOWr=0) empfängt.

13. Vorrichtung zur Schnittstellenbildung nach einem der Ansprüche 1 bis 12, **dadurch gekennzeichnet, dass** sie Mittel (53) für den Schreibzugriff zu der Speicherebene aufweist, die für jeden Schreibzugriff einen vorweggenommenen Wert (RdPtrNext), einen Taktgeberschlag im Voraus, des Schreibzeigers verwenden.

14. Vorrichtung zur Schnittstellenbildung nach einem der Ansprüche 7 bis 13, **dadurch gekennzeichnet, dass** sie Folgendes aufweist:
- ein viertes Zwischenregister (522), das es erlaubt, den vorweggenommenen Wert des Lesezeigers (RdPtrNext) abzutasten und zu blockieren, um am Ausgang den laufenden Wert (RdPtr) des Lesezeigers zu liefern, wobei das vierte Zwischenregister einen Aktivierungseingang (E) aufweist, der das Signal (FIFORdRq) empfängt, das die Leseanfragen trägt;
- ein fünftes Zwischenregister (521), das es erlaubt, einen vorweggenommenen Zwischenwert (RdPtrNext1) des Lesezeigers abzutasten und zu blockieren, um am Ausgang den vorweggenommenen Wert (RdPtrNext) des Lesezeigers zu liefern;
- Addiermittel (523), die es erlauben, den vorweggenommenen Wert (RdPtrNext) des Lesezeigers und die Größe (NbWords) der Wörtergruppe zu addieren, die zu einer laufenden Leseanfrage gehört, um den vorweggenommenen Zwischenwert (RdPtrNextl) des Lesezeigers zu erzeugen.

15. Vorrichtung zur Schnittstellenbildung nach den Ansprüchen 3 und 14, **dadurch gekennzeichnet, dass** das fünfte Zwischenregister einen umgekehrten Aktivierungseingang (E) aufweist, der das kombinatorische Signal zum Anzeigen eines leeren Speichers (CmdFifoEmptyl) empfängt.

16. Vorrichtung zur Schnittstellenbildung nach Anspruch 15, **dadurch gekennzeichnet, dass** die Berechnungsmittel (56) einer ersten Entfernung (WrNRdDistance) durch die Berechnungsmittel (514) einer zweiten Entfernung (WrNRdNDistance) derart ersetzt werden, dass die zweite Entfernung (WrNRdNDistance) an Stelle der ersten Entfernung (WrNRdDistance) verwendet wird.

17. Vorrichtung zur Schnittstellenbildung nach einem der Ansprüche 1 bis 16, **dadurch gekennzeichnet, dass** sie Folgendes aufweist:
- Mittel (54b) zum Erfassen des Zustandwechsels, die es erlauben, einen Übergang eines Zustands "leerer Speicher" auf einen Zustand "nicht leerer Speicher" zu erfassen;
- Mittel (54a) zum direkten Durchqueren (pass-through), die es erlauben, Daten, die auf dem Eingangsbus (FIFODin) gegenwärtig sind, direkt am Eingang (FIFODoutNext) der Ausgangsregisterbank ohne vorheriges Schreiben in die Speicherebene zu positionieren, wenn die Erfassungsmittel ein positives Erfassen ausführen.

18. Vorrichtung zur Schnittstellenbildung nach Anspruch 17, **dadurch gekennzeichnet, dass** die Erfassungsmittel des Zustandwechsels Vergleiche ausführen, die auf einem laufenden Wert (WrPtr) des Schreibzeigers und auf einem vorweggenommenen Wert (RdPtrNext), einen Taktgeberschlag im Voraus, des Lesezeigers beruhen.

19. Vorrichtung zur Schnittstellenbildung nach einem der Ansprüche 1 bis 18, **dadurch gekennzeichnet, dass** die Ausgangsregisterbank (55) in den Slaveblock verlagert ist.

20. Vorrichtung zur Schnittstellenbildung nach einem der Ansprüche 1 bis 19, **dadurch gekennzeichnet, dass** der Masterblock (21) ein Mikroprozessor ist, dass der Slaveblock (22) ein Coprozessor ist, und dass jede Wörtergruppe, deren Lesen von einer Leseanfrage gefordert wird, ein Operationscodewort (opcode) und N Operandenwörter mit N ≥ 0 aufweist.

21. Slaveblock (22) des Typs, der dazu bestimmt ist, mit einem Masterblock (21) über eine unidirektionale Vorrichtung zur Schnittstellenbildung (23) zusammenzuwirken, wobei der Slaveblock Folgendes aufweist:
- Mittel zum Übertragen von Leseanfragen (FIFORdRq=1) zu der Vorrichtung zur Schnittstellenbildung, wobei jede Leseanfrage das Lesen einer Wörtergruppe fordert;
- Mittel zum Lesen eines Ausgangssignals (FIFODout)) einer Ausgangsregisterbank, die Wörter enthalten kann, die in einer Speicherebene der Vorrichtung zur Schnittstellenbildung gelesen werden;
**dadurch gekennzeichnet, dass** er ferner Folgendes aufweist:
- Mittel zum Übertragen für jede Leseanfrage der Größe (NbWords) der Wörtergruppe, die zu der Leseanfrage gehört, wobei die Größe von einer Leseanfrage zur anderen variabel ist;
- Mittel zum Empfangen für jede Leseanfrage eines Quittierungssignals (FIFORdAck), das von der Vorrichtung zur Schnittstellenbildung kommt und einen Wert "wahr" (FIFORdAck=1) besitzt, wenn eine Anzahl von Wörtern mindestens gleich der Größer (NbWords) der Wörtergruppe, die zu der Leseanfrage gehört, auf dem Ausgangssignal (FIFODout) der Ausgangsregisterbank verfügbar ist.

22. Slaveblock nach Anspruch 21, **dadurch gekennzeichnet, dass** er ferner Folgendes aufweist:
- Mittel zum Empfangen eines Signals (FIFODoutNext), das am Eingang der Ausgangsregisterbank gegenwärtig ist und ein vorweggenommener Wert des Ausgangssignals (FIFODout) der Ausgangsregisterbank ist;
- Mittel zum Erzielen ausgehend von dem Signal (FIFODoutNext), das am Eingang in der Ausgangsregisterbank gegenwärtig ist, eines vermutlichen Werts einer Wörtergruppe, die zu einer darauf folgenden Leseanfrage gehört, während die Vorrichtung zur Schnittstellenbildung eine laufende Leseanfrage verarbeitet;
- Mittel zum Erzielen und Übertragen an die Vorrichtung zur Schnittstellenbildung der Größe (NbWords) der Wörtergruppe, die zu der darauf folgenden Leseanfrage gehört.

23. Slaveblock nach einem der Ansprüche 21 und 22, **dadurch gekennzeichnet, dass** er die Ausgangsregisterbank aufweist.

24. Slaveblock nach einem der Ansprüche 21 bis 23, **dadurch gekennzeichnet, dass** er ein Coprozessor ist, und dass jede Wörtergruppe, deren Lesen durch eine Leseanfrage gefordert wird, ein Operationscodewort (opcode) und N Operandenwörter mit N ≥ 0 aufweist.
